# EUROPEAN PATENT APPLICATION

(11) **EP 3 159 895 A1**
(43) Date of publication of application: **26.04.2017**
(21) Application number: 14899045.0
(22) Date of filing: 26.07.2014
(51) Int. Cl.: G11B 27/031, G06F 17/24

(54) **METHOD AND APPARATUS FOR EDITING AUDIO FILES**

(71) Applicant: Huawei Technologies Co. Ltd., Shenzhen, Guangdong 518129 (CN)
(72) Inventor: GOU, Junwei, Shenzhen Guangdong 518129 (CN); CHEN, Long, Shenzhen Guangdong 518129 (CN); ZHUANG, Zhishan, Shenzhen Guangdong 518129 (CN)
(74) Representative: Goddar, Heinz J.
(86) International application number: PCT/CN2014/083093
(87) International publication number: WO 2016/015181

(57) **Abstract**

Embodiments of the present invention disclose a method for editing an audio file, including: displaying, on a display interface of a terminal, duration of a to-be-edited audio file, and displaying, on the display interface of the terminal, lyrics that are of the to-be-edited audio file and that correspond to preset editing duration; adjusting the editing duration according to a start moment and/or an end moment entered by a user, and displaying, on the display interface of the terminal, lyrics corresponding to the adjusted editing duration; and when the user determines a start moment and an end moment for final editing, acquiring an audio file corresponding to editing duration that is between the start moment and the end moment. The embodiments of the present invention further disclose an apparatus for editing an audio file. The present invention has advantages that accuracy and efficiency of audio file editing can be improved, and user experience of an audio file editing function of the terminal can be enhanced.

## Description

### TECHNICAL FIELD

The present invention relates to the field of electronic technologies, and in particular, to a method and an apparatus for editing an audio file.

### BACKGROUND

As electronic devices such as mobile phones (for example, cell phones) are increasingly popularized, cell phones have become an indispensable part of people's daily life, and cell phone accessories such as a cell phone brand, a cell phone ringtone, and a cell phone strap have also gradually become signs of personal preference and personality expression of cell phone users. A cell phone user often wants to set a song that the cell phone user likes to a cell phone ringtone or an alarm, and if the song is relatively long, the cell phone user generally wants to clip out a refrain part of the song or a segment that the cell phone user likes very much. In this case, the cell phone user usually needs to be assisted by an audio editing tool to clip, out of a complete audio file, an audio segment needed by the cell phone user.

In the prior art, video editing is mainly performed by editing an audio file on a computer or a cell phone by using audio editing software. In an existing audio editing technology, an audio file needs to be loaded first; an audio file in a corresponding time period is saved according to a start moment and an end moment that are selected by a user; the user determines, by listening to the saved audio file, whether the saved audio file is an audio segment needed by the user. If the saved audio file is the audio segment needed by the user, the user may set the audio file to a ringtone or an alarm, or if the saved audio file is not the audio segment needed by the user, the user needs to adjust the start moment and the end moment according to a degree of familiarity of the user to the audio, so as to clip out a more accurate segment. In the existing audio editing technology, when editing an audio segment, the user cannot see specific audio file information (such as lyrics), that is, the user is in a state of blindly performing editing, and the user needs to enter an editing start moment and end moment according to a degree of familiarity of the user to the audio segment, so as to save a corresponding audio segment, and determine, through listening, whether the audio segment is the segment needed by the user. As a result, editing accuracy is low. In the existing editing technology, the user usually needs to repeatedly adjust a start time or an end time to accurately obtain the needed audio segment through editing, editing efficiency is low, and user experience is poor.

### SUMMARY

Embodiments of the present invention provide a method and an apparatus for editing an audio file, where duration of a to-be-edited audio file and lyrics corresponding to the to-be-edited audio file can be displayed on a display interface of a terminal, editing duration can further be determined according to a start moment and/or an end moment entered by a user, and lyrics corresponding to the editing duration can be displayed on the display interface of the terminal and shown to the terminal user, and an audio file corresponding to the editing duration determined by the user can further be acquired, thereby improving accuracy and efficiency of audio file editing, and enhancing user experience of an audio file editing function of the terminal.

A first aspect of the embodiments of the present invention provides a method for editing an audio file, which may include:
displaying, on a display interface of a terminal, duration of a to-be-edited audio file, and displaying, on the display interface of the terminal, lyrics that are of the to-be-edited audio file and that correspond to preset editing duration;
adjusting the editing duration according to a start moment and/or an end moment entered by a user, and displaying, on the display interface of the terminal, lyrics corresponding to the adjusted editing duration, for the user to determine audio file content corresponding to the editing duration; and
when the user determines a start moment and an end moment for final editing, acquiring an audio file corresponding to editing duration that is between the start moment and the end moment.

With reference to the first aspect, in a first possible implementation manner, the displaying, on a display interface of a terminal, duration of a to-be-edited audio file, and displaying, on the display interface of the terminal, lyrics that are of the to-be-edited audio file and that correspond to preset editing duration includes:
displaying, on the display interface of the terminal, the duration of the to-be-edited audio file by using a timeline, and displaying, on the display interface of the terminal, lyrics that are of the to-be-edited audio file and that correspond to the duration; and
marking the lyrics that are of the to-be-edited audio file and that correspond to the preset editing duration, and displaying the marked lyrics on the display interface of the terminal, to distinguish display of the lyrics corresponding to the editing duration and lyrics that fall outside the editing duration, where
the editing duration is less than or equal to the duration of the to-be-edited audio file.

With reference to the first possible implementation manner of the first aspect, in a second possible implementation manner, the displaying the marked lyrics on the display interface of the terminal includes:
performing highlighting processing on the marked lyrics, and displaying, on a same display window of the display interface of the terminal, the lyrics on which highlighting processing has been performed and the lyrics corresponding to the duration of the to-be-edited audio file; or
performing highlighting processing on the marked lyrics, inserting a new display window to a display window of the lyrics corresponding to the duration of the to-be-edited audio file, and displaying the marked lyrics on the new display window, where
the highlighting processing includes: at least one of using a bold font, coloring, or floating.

With reference to any one of the first aspect to the second possible implementation manner of the first aspect, in a third possible implementation manner, after the displaying, on a display interface of a terminal, duration of a to-be-edited audio file, the method further includes:
correspondingly displaying, on the display interface of the terminal, a waveform graph or a spectrum graph of the to-be-edited audio file according to the timeline, for the user to perform editing according to the waveform graph or the spectrum graph; and
marking a waveform graph or a spectrum graph corresponding to the preset editing duration, and displaying, on the display interface of the terminal, the marked waveform graph or spectrum graph and the marked lyrics.

With reference to the third possible implementation manner of the first aspect, in a fourth possible implementation manner, the displaying, on the display interface of the terminal, the marked waveform graph or spectrum graph and the marked lyrics includes:
performing highlighting processing on the marked waveform graph or spectrum graph and the lyrics, and correspondingly displaying the marked waveform graph or spectrum graph above the timeline; and
displaying, on a display window of the waveform graph or the spectrum graph, the lyrics corresponding to the duration of the to-be-edited audio file and the lyrics on which highlighting processing has been performed and that are included in the to-be-edited audio file, where
the highlighting processing includes: at least one of using a bold font, coloring, or floating.

With reference to any one of the first aspect to the fourth possible implementation manner of the first aspect, in a fifth possible implementation manner, the adjusting the editing duration according to a start moment and/or an end moment entered by a user includes:
acquiring a touch point of the user on a touch panel of the terminal, and determining coordinates that are of the touch point and that are on the touch panel, where the touch point corresponds to an editing start point or end point of the to-be-edited audio file;
determining, according to a preset correspondence between coordinates of the touch panel and each moment in the duration of the to-be-edited audio file, a moment corresponding to the touch point; and
adjusting the editing duration according to the moment corresponding to the touch point, and the start moment and the end moment of the preset editing duration, where
the touch panel of the terminal includes: a touch screen or a touch control screen of the terminal.

With reference to any one of the first aspect to the fourth possible implementation manner of the first aspect, in a sixth possible implementation manner, the adjusting the editing duration according to a start moment and/or an end moment entered by a user includes:
acquiring a touch track of the user on a touch panel of the terminal, and determining coordinates that are of a start point and an end point of the touch track and that are on the touch panel, where the start point and the end point of the touch track correspond to an editing start point and end point of the to-be-edited audio file;
determining, according to a preset correspondence between coordinates of the touch panel and each moment in the duration of the to-be-edited audio file, moments corresponding to the start point and the end point of the touch track; and
adjusting the editing duration according to the moments corresponding to the start point and the end point of the touch track, and the start moment and the end moment of the preset editing duration, where
the touch panel of the terminal includes: a touch screen or a touch control screen of the terminal.

With reference to any one of the first aspect to the sixth possible implementation manner of the first aspect, in a seventh possible implementation manner, before the displaying, on a display interface of a terminal, duration of a to-be-edited audio file, the method further includes:
acquiring characteristic information of the to-be-edited audio file, where
the characteristic information includes the duration, the lyrics, and the waveform graph or the spectrum graph.

A second aspect of the embodiments of the present invention provides an apparatus for editing an audio file, which may include:
an output module, configured to display, on a display interface of a terminal, duration of a to-be-edited audio file, and display, on the display interface of the terminal, lyrics that are of the to-be-edited audio file and that correspond to preset editing duration;
a processing module, configured to adjust the editing duration according to a start moment and/or an end moment entered by a user, and display, on the display interface of the terminal by using the output module, lyrics corresponding to the adjusted editing duration, for the user to determine audio file content corresponding to the editing duration; and
an acquiring module, configured to: when the user determines a start moment and an end moment for final editing, acquire an audio file corresponding to editing duration that is between the start moment and the end moment.

With reference to the second aspect, in a first possible implementation manner, the output module includes:
an output unit, configured to display, on the display interface of the terminal, the duration of the to-be-edited audio file by using a timeline, and display lyrics that are of the to-be-edited audio file and that correspond to the duration on the display interface of the terminal; and
a marking unit, configured to mark the lyrics that are of the to-be-edited audio file and that correspond to the preset editing duration, and display, by using the output unit, the marked lyrics on the display interface of the terminal, to distinguish display of the lyrics corresponding to the editing duration and lyrics that fall outside the editing duration, where
the editing duration is less than or equal to the duration of the to-be-edited audio file.

With reference to the first possible implementation manner of the second aspect, in a second possible implementation manner, the marking unit is specifically configured to:
perform highlighting processing on the marked lyrics, and display, on a same display window of the display interface of the terminal by using the output unit, the lyrics on which highlighting processing has been performed and the lyrics corresponding to the duration of the to-be-edited audio file; or
perform highlighting processing on the marked lyrics, insert a new display window to a display window of the lyrics corresponding to the duration of the to-be-edited audio file, and display the marked lyrics on the new display window by using the output unit, where
the highlighting processing includes: at least one of using a bold font, coloring, or floating.

With reference to any one of the second aspect to the second possible implementation manner of the second aspect, in a third possible implementation manner, the output module is further specifically configured to:
correspondingly display, on the display interface of the terminal, a waveform graph or a spectrum graph of the to-be-edited audio file according to the timeline, for the user to perform editing according to the waveform graph or the spectrum graph; and
mark a waveform graph or a spectrum graph corresponding to the preset editing duration, and display, on the display interface of the terminal, the marked waveform graph or spectrum graph and the marked lyrics.

With reference to the third possible implementation manner of the second aspect, in a fourth possible implementation manner, the output module is specifically configured to:
perform highlighting processing on the marked waveform graph or spectrum graph and the lyrics, and correspondingly display the marked waveform graph or spectrum graph above the timeline; and
display, on a display window of the waveform graph or the spectrum graph, the lyrics corresponding to the duration of the to-be-edited audio file and the lyrics on which highlighting processing has been performed and that are included in the to-be-edited audio file, where
the highlighting processing includes: at least one of using a bold font, coloring, or floating.

With reference to any one of the second aspect to the fourth possible implementation manner of the second aspect, in a fifth possible implementation manner, the processing module is specifically configured to:
acquire a touch point of the user on a touch panel of the terminal, and determine coordinates that are of the touch point and that are on the touch panel, where the touch point corresponds to an editing start point or end point of the to-be-edited audio file;
determine, according to a preset correspondence between coordinates of the touch panel and each moment in the duration of the to-be-edited audio file, a moment corresponding to the touch point; and
adjust the editing duration according to the moment corresponding to the touch point, and the start moment and the end moment of the preset editing duration, where
the touch panel of the terminal includes: a touch screen or a touch control screen of the terminal.

With reference to any one of the second aspect to the fourth possible implementation manner of the second aspect, in a sixth possible implementation manner, the processing module is specifically configured to:
acquire a touch track of the user on a touch panel of the terminal, and determine coordinates that are of a start point and an end point of the touch track and that are on the touch panel, where the start point and the end point of the touch track correspond to an editing start point and end point of the to-be-edited audio file;
determine, according to a preset correspondence between coordinates of the touch panel and each moment in the duration of the to-be-edited audio file, moments corresponding to the start point and the end point of the touch track; and
adjust the editing duration according to the moments corresponding to the start point and the end point of the touch track, and the start moment and the end moment of the preset editing duration, where
the touch panel of the terminal includes: a touch screen or a touch control screen of the terminal.

With reference to any one of the second aspect to the sixth possible implementation manner of the second aspect, in a seventh possible implementation manner, the apparatus further includes:
an acquiring module, configured to acquire characteristic information of the to-be-edited audio file, where
the characteristic information includes the duration, the lyrics, and the waveform graph or the spectrum graph.

A third aspect of the embodiments of the present invention provides a terminal, which may include: an output device and a processor, where the output device is connected to the processor;
the output device is configured to display, on a display interface of the terminal, duration of a to-be-edited audio file, and display, on the display interface of the terminal, lyrics that are of the to-be-edited audio file and that correspond to preset editing duration;
the processor is configured to adjust the editing duration according to a start moment and/or an end moment entered by a user, and display, on the display interface of the terminal by using the output device, lyrics corresponding to the adjusted editing duration, for the user to determine audio file content corresponding to the editing duration; and
the processor is further configured to: when the user determines a start moment and an end moment for final editing, acquire an audio file corresponding to editing duration that is between the start moment and the end moment.

With reference to the third aspect, in a first possible implementation manner, the output device is specifically configured to:
display, on the display interface of the terminal, the duration of the to-be-edited audio file by using a timeline, and display, on the display interface of the terminal, lyrics that are of the to-be-edited audio file and that correspond to the duration; and
mark the lyrics that are of the to-be-edited audio file and that correspond to the preset editing duration, and display the marked lyrics on the display interface of the terminal, to distinguish display of the lyrics corresponding to the editing duration and lyrics that fall outside the editing duration, where
the editing duration is less than or equal to the duration of the to-be-edited audio file.

With reference to the first possible implementation manner of the third aspect, in a second possible implementation manner, the output device is specifically configured to:
perform highlighting processing on the marked lyrics, and display, on a same display window of the display interface of the terminal, the lyrics on which highlighting processing has been performed and the lyrics corresponding to the duration of the to-be-edited audio file; or
perform highlighting processing on the marked lyrics, insert a new display window to a display window of the lyrics corresponding to the duration of the to-be-edited audio file, and display the marked lyrics on the new display window, where
the highlighting processing includes: at least one of using a bold font, coloring, or floating.

With reference to any one of the third aspect to the second possible implementation manner of the third aspect, in a third possible implementation manner, the output device is further specifically configured to:
correspondingly display, on the display interface of the terminal, a waveform graph or a spectrum graph of the to-be-edited audio file according to the timeline, for the user to perform editing according to the waveform graph or the spectrum graph; and
mark a waveform graph or a spectrum graph corresponding to the preset editing duration, and display, on the display interface of the terminal, the marked waveform graph or spectrum graph and the marked lyrics.

With reference to the third possible implementation manner of the third aspect, in a fourth possible implementation manner, the output device is specifically configured to:
perform highlighting processing on the marked waveform graph or spectrum graph and the lyrics, and correspondingly display the marked waveform graph or spectrum graph above the timeline; and
display, on a display window of the waveform graph or the spectrum graph, the lyrics corresponding to the duration of the to-be-edited audio file and the lyrics on which highlighting processing has been performed and that are included in the to-be-edited audio file, where
the highlighting processing includes: at least one of using a bold font, coloring, or floating.

With reference to any one of the third aspect to the fourth possible implementation manner of the third aspect, in a fifth possible implementation manner, the terminal further includes an input device, and the input device is connected to the processor;
the input device is configured to acquire a touch point of the user on a touch panel of the terminal, and determine coordinates that are of the touch point and that are on the touch panel, where the touch point corresponds to an editing start point or end point of the to-be-edited audio file; and
the processor is specifically configured to:
determine, according to a preset correspondence between coordinates of the touch panel and each moment in the duration of the to-be-edited audio file, a moment corresponding to the touch point acquired by the input device; and
adjust the editing duration according to the moment corresponding to the touch point, and the start moment and the end moment of the preset editing duration, where
the touch panel of the terminal includes: a touch screen or a touch control screen of the terminal.

With reference to any one of the third aspect to the fourth possible implementation manner of the third aspect, in a sixth possible implementation manner, the terminal further includes an input device, and the input device is connected to the processor;
the input device is configured to acquire a touch track of the user on a touch panel of the terminal, and determine coordinates that are of a start point and an end point of the touch track and that are on the touch panel, where the start point and the end point of the touch track correspond to an editing start point and end point of the to-be-edited audio file; and
the processor is specifically configured to:
determine, according to a preset correspondence between coordinates of the touch panel and each moment in the duration of the to-be-edited audio file, moments corresponding to the start point and the end point of the touch track determined by the input device; and
adjust the editing duration according to the moments corresponding to the start point and the end point of the touch track, and the start moment and the end moment of the preset editing duration, where
the touch panel of the terminal includes: a touch screen or a touch control screen of the terminal.

With reference to any one of the third aspect to the sixth possible implementation manner of the third aspect, in a seventh possible implementation manner, the processor is further specifically configured to:
acquire characteristic information of the to-be-edited audio file, where
the characteristic information includes the duration, the lyrics, and the waveform graph or the spectrum graph.

According to the method for editing an audio file described in the embodiments of the present invention, duration of a to-be-edited audio file and lyrics corresponding to the to-be-edited audio file can be displayed on a display interface of a terminal, editing duration of an audio file can further be determined according to a start moment and/or an end moment entered by a user, and lyrics corresponding to the editing duration can be displayed on the display interface of the terminal and shown to the terminal user, for the terminal user to determine audio file content corresponding to editing duration selected by the terminal use, so that an audio file corresponding to the editing duration determined by the user may further be saved, thereby improving accuracy and efficiency of audio file editing, and enhancing user experience of an audio file editing function of the terminal.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a first embodiment of a method for editing an audio file according to an embodiment of the present invention;
FIG. 2 is a schematic flowchart of a second embodiment of a method for editing an audio file according to an embodiment of the present invention;
FIG. 3 is a first schematic diagram of display in an implementation manner in the second embodiment of the method for editing an audio file according to an embodiment of the present invention;
FIG. 4 is a second schematic diagram of display in an implementation manner in the second embodiment of the method for editing an audio file according to an embodiment of the present invention;
FIG. 5 is a third schematic diagram of display in an implementation manner in the second embodiment of the method for editing an audio file according to an embodiment of the present invention;
FIG. 6 is a schematic diagram of display in another implementation manner in the second embodiment of the method for editing an audio file according to an embodiment of the present invention;
FIG. 7 is a schematic structural diagram of a first embodiment of an apparatus for editing an audio file according to an embodiment of the present invention;
FIG. 8 is a schematic structural diagram of a second embodiment of an apparatus for editing an audio file according to an embodiment of the present invention;
FIG. 9 is a schematic structural diagram of an output module in a second embodiment of an apparatus for editing an audio file according to an embodiment of the present invention;
FIG. 10 is a schematic structural diagram of an embodiment of a terminal according to an embodiment of the present invention; and
FIG. 11 is another schematic structural diagram of an embodiment of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In specific implementation, a terminal described in the embodiments of the present invention may be any mobile or portable electronic device, which may include: a mobile phone (for example, a cell phone), a mobile computer (for example, a notebook computer), a tablet computer, a personal digital assistant (Personal Digital Assistant, PDA), a media player, or the like. The foregoing terminals are only examples, but are not exhaustive. The present invention includes, but is not limited to, the foregoing terminals, and one item or a combination of multiple items in the foregoing listed terminal examples belong to the terminal protected by the embodiments of the present invention. An apparatus for editing an audio file described in the embodiments of the present invention may be specifically an electronic device applied to the terminal described in the embodiments of the present invention, or be specifically the terminal described in the embodiments of the present invention. A terminal is used as an example in the following embodiments for specific description.

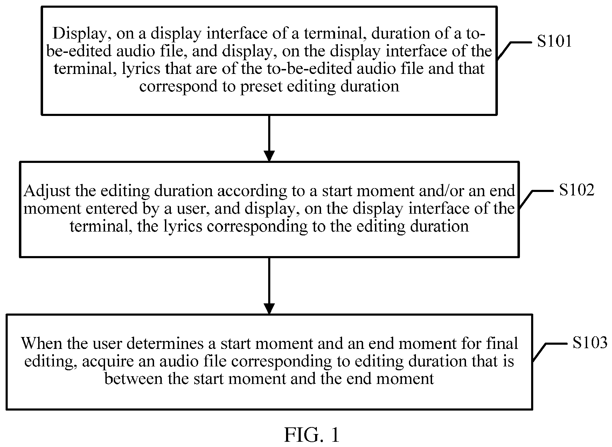

Referring to FIG. 1, FIG. 1 is a schematic flowchart of a first embodiment of a method for editing an audio file according to an embodiment of the present invention. The method for editing an audio file described in this embodiment includes the following steps:
S101: Display, on a display interface of a terminal, duration of a to-be-edited audio file, and display, on the display interface of the terminal, lyrics that are of the to-be-edited audio file and that correspond to preset editing duration.

In some feasible implementation manners, the terminal may first load a source file of the to-be-edited audio file to a memory of the terminal, so as to perform editing on the source file, and acquire an audio segment needed by a terminal user. In specific implementation, after loading the source file of the to-be-edited audio file, the terminal may parse the source file, and determine duration of the to-be-edited audio file, and may further display the duration on the display interface of the terminal. The terminal may display, on the display interface of the terminal, the duration of the to-be-edited audio file by using a timeline, and show the duration to the terminal user. The terminal user may select an editing start point and end point according to the duration displayed on the timeline on the display interface of the terminal, and may further clip out an audio file needed by the terminal user. The timeline described in the embodiments of the present invention may be specifically a coordinate axis used to display a time, or a line used to display a time, or a bar diagram used to display a time, or the like, which is not limited herein. In this embodiment of the present invention, while loading the source file of the to-be-edited audio file to the memory of the terminal, the terminal may further load a lyric file of the to-be-edited audio file to the memory of the terminal. The memory of the terminal described in this embodiment of the present invention may be specifically a software module such as a storage unit or a storage module in the terminal, or a hardware module such as a storage or a memory module. The storage unit may be configured to store data such as a software program or an audio file, and may specifically exist in a form that may be determined according to a specific implementation manner of the terminal, which is not limited herein. After loading the lyric file of the to-be-edited audio file, the terminal may parse the lyric file, and acquire a correspondence between lyrics and duration of the to-be-edited audio file, that is, lyrics corresponding to each moment in the duration of the to-be-edited audio file, and may further display corresponding lyrics according to editing duration selected by the user.

In some feasible implementation manners, after determining the duration of the to-be-edited audio file, and displaying the duration of the to-be-edited audio file on the display interface of the terminal by using a timeline, the terminal may display, on the display interface of the terminal, the lyrics that are of the to-be-edited audio file and that correspond to the preset editing duration. That is, the terminal may preset duration (for example, duration of a refrain part) as default editing duration according to the duration of the to-be-edited audio file, and when the user opens an operation interface for editing an audio file, the terminal may display, on the display interface of the terminal, the lyrics that are of the to-be-edited audio file and that correspond to the preset editing duration (that is, the default editing duration). Specifically, the refrain part of the to-be-edited audio file may be determined according to data such as audio power of each moment of the to-be-edited audio file, to determine duration of the refrain part, and the duration of the refrain part may further be preset as editing duration. The user may determine, according to the lyrics displayed on the display interface of the terminal, whether an audio file corresponding to the editing duration is a segment needed by the user, and if the audio file corresponding to the default editing duration is not the segment needed by the user, the user may enter an editing start moment and end moment according to a requirement of the user, and clip out the segment needed by the user, or adjust a start moment and an end moment of the default editing duration, until an audio file corresponding to the editing duration is the segment needed by the user.

S102: Adjust the editing duration according to a start moment and/or an end moment entered by a user, and display, on the display interface of the terminal, lyrics corresponding to the adjusted editing duration.

In some feasible implementation manners, the display interface of the terminal described in this embodiment of the present invention may be a touch panel of the terminal, or another man-machine interface. The touch panel may include a touch control screen or a touch screen, and may collect operation actions that the terminal user touches or approaches the touch panel. The user may perform an operation action on the touch panel or at a location (a range within which an action can be sensed by the touch panel) near the touch panel by using a finger, a stylus, or another specified input tool, and the touch panel may generate an input signal according to the operation action of the user. The display interface of the terminal may show information such as the duration or the lyrics of the to-be-edited audio file to the terminal user, or may receive numbers, characters, or gesture information entered by the terminal user, to generate signal input related to user setting or function control.

In some feasible implementation manners, when the terminal user opens an operation interface for editing an audio file, the terminal may display, on the display interface of the terminal, the duration of the to-be-edited audio file and the lyrics that are of the to-be-edited audio file and that correspond to the preset editing duration, and show the duration and the lyrics to the terminal user by using the display interface of the terminal. When an audio file corresponding to the preset editing duration is not a segment needed by the terminal user, the terminal user may adjust the editing duration on the display interface according to a requirement of the terminal user. The terminal may receive a start moment and/or an end moment entered by the user, to adjust the editing duration, and display, on the display interface of the terminal, lyrics corresponding to the adjusted editing duration, for the user to determine audio file content corresponding to the editing duration. The terminal user may determine, according to the lyrics displayed on the display interface of the terminal, whether an audio file corresponding to editing duration between the start moment and/or the end moment entered by the terminal user is the audio segment needed by the terminal user. That is, in this embodiment of the present invention, when editing an audio file, the terminal user can see lyrics corresponding to each duration of the to-be-edited audio file, or even lyrics corresponding to each moment, and may further determine, according to content of the lyrics, whether an audio file corresponding to editing duration selected by the terminal user is the segment needed by the terminal user. The terminal user can accurately determine, according to the lyrics displayed on the display interface of the terminal, content of the editing duration selected by the terminal user, and a radio confirms, through listening, whether the edited audio file is a file needed by the radio, and converts audio file editing into visual editing, thereby improving accuracy and efficiency of audio file editing.

S103: When the user determines a start moment and an end moment for final editing, acquire an audio file corresponding to editing duration that is between the start moment and the end moment.

In some feasible implementation manners, when determining, according to the lyrics displayed on the display interface, that an audio file corresponding to the editing duration selected by the terminal user is an audio segment that the terminal user likes, the terminal user may choose to acquire an audio file corresponding to the editing segment, and play or save the acquired audio file. In specific implementation, the terminal may set a saving button (or an acquiring button) on an operation interface that is for editing an audio file and that is displayed on the display interface. When determining to save the audio file corresponding to the editing duration selected by the user, the user may touch or click the saving button. When detecting an input signal corresponding to the saving button, the terminal may acquire a current start moment and a current end moment that are selected by the user (that is, a start moment and an end moment that are for final editing and that are determined by the user), and save an audio file corresponding to editing duration that is between the start moment and the end moment. Specifically, the terminal may use a tool such as a media file cutting function package (for example: MediaWriter) to clip out audio code stream information in the editing duration that is between the start moment and the end moment, and save the clipped out audio code stream information as a new audio file, that is, the audio file needed by the user. After clipping out the audio file (an audio file corresponding to the editing duration finally selected by the user), the terminal may save the audio file to a memory of the terminal, and the terminal user may set the audio file to a cell phone ringtone or an alarm.

In this embodiment of the present invention, a terminal may display, on a display interface of the terminal, duration of a to-be-edited audio file, and lyrics corresponding to preset editing duration, for a user to determine, according to the lyrics displayed on the display interface, a location of an audio segment needed by the user, that is, the terminal user may determine, according to the lyrics displayed on the display interface, locations of a start point and an end point of an audio segment needed by the terminal user, to further adjust the editing duration. The terminal may determine editing duration of an audio file according to a start moment and/or an end moment entered by the user, and display, on the display interface of the terminal, lyrics corresponding to the editing duration, to show the lyrics to the terminal user, for the terminal user to determine audio file content corresponding to the editing duration selected by the terminal user, and may further save an audio file corresponding to the editing duration determined by the user, thereby improving accuracy and efficiency of audio file editing, and enhancing user experience of an audio file editing function of the terminal.

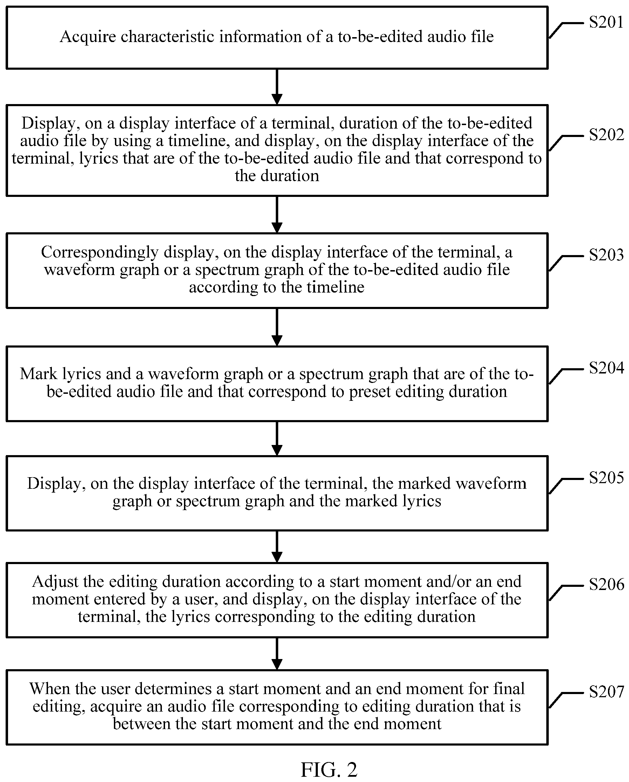

Referring to FIG. 2, FIG. 2 is a schematic flowchart of a second embodiment of a method for editing an audio file according to an embodiment of the present invention. The method for editing an audio file described in this embodiment includes steps:
S201: Acquire characteristic information of a to-be-edited audio file.

In some feasible implementation manners, the to-be-edited audio file described in this embodiment of the present invention is an audio file that a terminal user wants to edit, for example, a song that the terminal user likes, or the like. The user may perform editing on the to-be-edited audio file, and clip, out of the to-be-edited audio file, an audio file corresponding to editing duration selected by the user, to use the clipped out audio file as a cell phone ringtone, an alarm or the like of the user. In specific implementation, the characteristic information of the to-be-edited audio file may include: duration, lyrics, and a waveform graph or a spectrum graph of the to-be-edited audio file.

In some feasible implementation manners, before editing an audio file, the terminal user may first download a to-be-edited audio file (for example, a song that the terminal user likes) into a memory of the terminal, that is, the terminal may first load a source file of the to-be-edited audio file to the memory of the terminal, so as to perform editing on the source file, and acquire an audio segment needed by the terminal user. In specific implementation, after loading the source file of the to-be-edited audio file, the terminal may parse the source file, and determine duration of the to-be-edited audio file, and may further display, on the display interface of the terminal, the duration of the to-be-edited audio file. After loading the source file of the to-be-edited audio file, the terminal may further parse the source file, and draw, according to the source file, a waveform graph or a spectrum graph corresponding to the duration of the to-be-edited audio file. For example, the terminal may perform calculation by using a media stream analysis technology (for example, Fourier transform) and according to the source file of the to-be-edited audio file and pulse code modulation (Pulse Code Modulation, PCM) data that corresponds to each time point (that is, a moment) in the source file, and then draw the waveform graph or the spectrum graph of the to-be-edited audio file, that is, draw a waveform graph or a spectrum graph corresponding to the duration of the to-be-edited audio file, and display the waveform graph or the spectrum graph above a timeline that is on the display interface of the terminal and that displays the duration of the to-be-edited audio file. In this embodiment of the present invention, the waveform graph or the spectrum graph of the to-be-edited audio file is a set of power corresponding to each moment in the duration of the to-be-edited audio file, and when the duration of the to-be-edited audio file is a period of continuous time, the set of power corresponding to each moment may present the waveform graph or the spectrum graph of the to-be-edited audio file. After drawing the waveform graph or the spectrum graph of the to-be-edited audio file according to the timeline, the terminal may correspondingly display the waveform graph or the spectrum graph on the display interface of the terminal, and display the waveform graph or the spectrum graph above the timeline that displays the duration of the to-be-edited audio file, that is, may display power, of each moment that is in the duration of the to-be-edited audio file, in the continuous time on the timeline.

In some feasible implementation manners, while loading the source file of the to-be-edited audio file to the memory of the terminal, the terminal may further load a lyric file of the to-be-edited audio file to the memory of the terminal. After loading the lyric file of the to-be-edited audio file, the terminal may parse the lyric file, and acquire a correspondence between lyrics and duration of the to-be-edited audio file, that is, lyrics corresponding to each moment in the duration of the to-be-edited audio file, and may further display corresponding lyrics according to editing duration selected by the user. The correspondence between lyrics of the to-be-edited audio file and duration of the to-be-edited audio file is used to determine lyrics corresponding to any editing duration in the to-be-edited audio file, that is, the terminal may determine, according to the correspondence, the lyrics corresponding to any duration selected by the terminal user. After the terminal acquires the duration, the waveform graph, or the spectrum graph of the to-be-edited audio file, when the terminal user opens an operation interface for editing an audio file, the terminal may display, on the display interface of the terminal, characteristic information such as the duration, the waveform graph or the spectrum graph of the to-be-edited audio file, and show the characteristic information to the terminal user, and the terminal user may perform editing on the to-be-edited audio file according to the characteristic information displayed on the operation interface (which is specifically the display interface of the terminal), and set audio file editing to visual editing, thereby improving accuracy and efficiency of audio file editing.

S202: Display, on a display interface of a terminal, duration of the to-be-edited audio file by using a timeline, and display, on the display interface of the terminal, lyrics that are of the to-be-edited audio file and that correspond to the duration.

S203: Correspondingly display, on the display interface of the terminal, a waveform graph or a spectrum graph of the to-be-edited audio file according to the timeline.

S204: Mark lyrics and a waveform graph or a spectrum graph that are of the to-be-edited audio file and that correspond to preset editing duration.

S205: Display, on the display interface of the terminal, the marked waveform graph or spectrum graph and the marked lyrics.

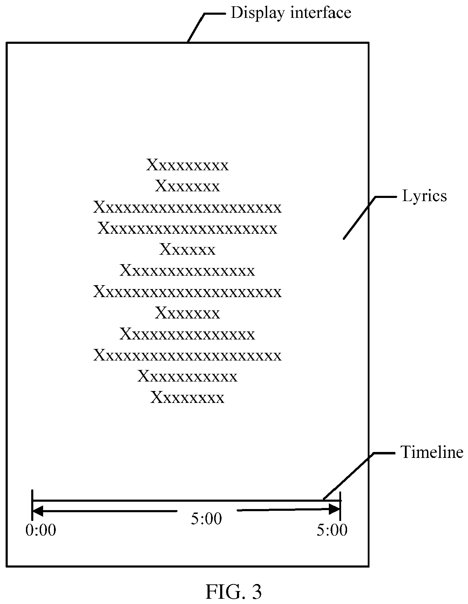

In some feasible implementation manners, the terminal may display, on the display interface of the terminal, the duration of the to-be-edited audio file by using a timeline, and show the duration to the terminal user. The terminal user may select an editing start point and end point according to the duration displayed on the timeline on the display interface of the terminal, and may further clip out an audio file needed by the terminal user. In specific implementation, while displaying the duration of the audio file on the display interface by using the timeline, the terminal may further display lyrics corresponding to the duration on the display interface. For example, if total duration of the to-be-edited audio file is five minutes, the terminal may display five-minute duration on the display interface of the terminal by using the timeline, and display lyrics (lyrics of an entire song) corresponding to the five-minute duration on the display interface. As shown in FIG. 3, in this embodiment of the present invention, before displaying, on the display interface of the terminal, lyrics of the to-be-edited audio file, the terminal may further preset duration (for example, duration of a refrain part or total duration of the to-be-edited audio file) as default editing duration according to the duration of the to-be-edited audio file, and when the user opens an operation interface for editing an audio file, the terminal may display, on the display interface of the terminal, lyrics that are of the to-be-edited audio file and that correspond to the preset editing duration (that is, the default editing duration). Specifically, the refrain part of the to-be-edited audio file may be determined according to data such as audio power of each moment of the to-be-edited audio file, to determine duration of the refrain part, and the duration of the refrain part may further be preset as editing duration. Specifically, the terminal may mark the lyrics corresponding to the preset editing duration, to distinguish display of the lyrics corresponding to the preset editing duration and lyrics that fall outside the editing duration and that fall within the total duration of the to-be-edited audio file, and further display the marked lyrics on the display interface of the terminal. In this embodiment of the present invention, the editing duration may be less than or equal to the duration (that is, the total duration) of the to-be-edited audio file, that is, the editing duration may be the total duration of the to-be-edited audio file, or may be a segment of the to-be-edited audio file.

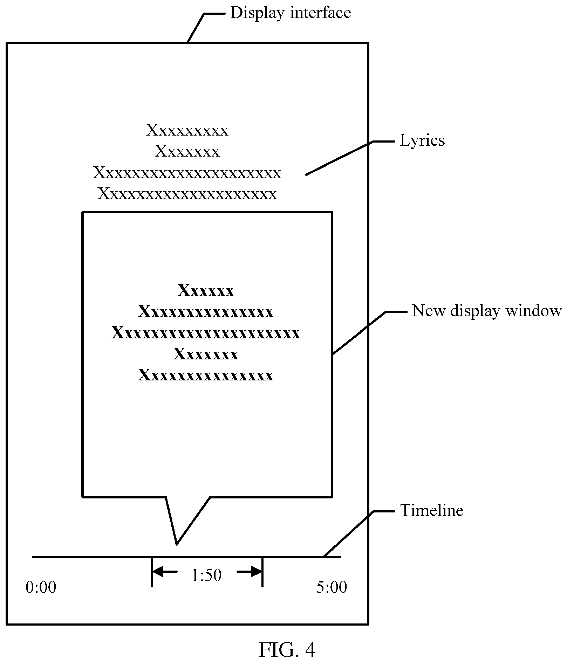

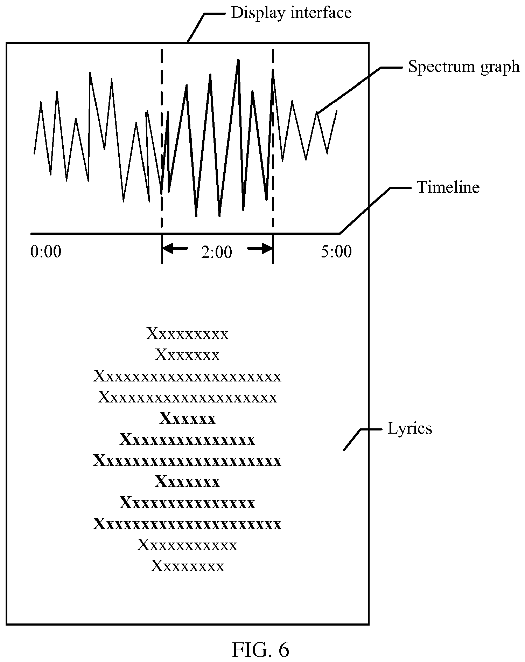

In some feasible implementation manners, when displaying, on the display interface of the terminal, the lyrics (that is, the marked lyrics) corresponding to the preset editing duration (for example, a two-minute refrain part), the terminal may perform highlighting processing on the marked lyrics, and display, on a same display window on the display interface of the terminal, the lyrics on which highlighting processing has been performed and the lyrics corresponding to the duration of to-be-edited audio file, as shown in FIG. 6. In addition, after performing highlighting processing on the lyrics corresponding to the preset editing duration, the terminal may further insert a new display window to the display window of lyrics (lyrics of an entire song) corresponding to duration (total duration) of the to-be-edited audio file, and display the marked lyrics on the new display window, as shown in FIG. 4. In this embodiment of the present invention, the highlighting processing performed on the marked lyrics may include a processing manner such as using a bold font, coloring, or floating, that is, by using the highlighting processing manner, the marked lyrics can be displayed on the display interface of the terminal in a highlighting manner, to be distinguished from lyrics of another part, and the user may rapidly determine lyrics corresponding to the duration selected by the user. The floating processing may be specifically performing staggered displaying on the marked lyrics and the other lyrics, for example, setting a display layer of the marked lyrics to be above a display layer of the other lyrics, or the like.

In some feasible implementation manners, while displaying, on the display interface of the terminal, the duration of the to-be-edited audio file, the terminal may further display a waveform graph or a spectrum graph of the to-be-edited audio file above a timeline that displays duration, for the terminal user to perform editing according to the waveform graph or the spectrum graph. Specifically, the terminal may mark the waveform graph or the spectrum graph corresponding to the preset editing duration, and display, on the display interface of the terminal, the marked waveform graph or spectrum graph and the marked lyrics. The terminal may perform highlighting processing on the marked waveform graph or spectrum graph, and display, above the timeline that displays the duration of the to-be-edited audio file, the waveform graph or the spectrum graph on which highlighting processing has been performed, and may further display, on the display window of the waveform graph or the spectrum graph, lyrics corresponding to the total duration of the to-be-edited audio file and lyrics (lyrics corresponding to the editing duration) on which highlighting processing has been performed and that are included in the total duration, as shown in FIG. 6. The highlighting processing performed on the waveform graph or the spectrum graph may include: using a bold font, coloring, floating, or the like, to distinguish the part of the waveform graph or the spectrum graph corresponding to the editing duration from the waveform graph or the spectrum graph that falls outside the editing duration. In specific implementation, after the terminal displays, on the display interface of the terminal, information such as the waveform graph or spectrum graph, and the lyrics that correspond to the preset editing duration, the user may determine, according to the lyrics displayed on the display interface of the terminal, whether an audio file corresponding to the editing duration is a segment needed by the user, and if the audio file corresponding to the default editing duration is not the segment needed by the user, the user may enter an editing start moment and end moment according to a requirement of the user, and clip out the segment needed by the user, or adjust a start moment and an end moment of the default editing duration, until an audio file corresponding to the editing duration is the segment needed by the user.

S206: Adjust the editing duration according to a start moment and/or an end moment entered by a user, and display, on the display interface of the terminal, lyrics corresponding to the adjusted editing duration.

In some feasible implementation manners, the display interface of the terminal described in this embodiment of the present invention may be a touch panel of the terminal, or another man-machine interface. The touch panel may include a touch control screen or a touch screen, and may collect operation actions that the terminal user touches or approaches the touch panel. The user may perform an operation action on the touch panel or at a location (a range within which an action can be sensed by the touch panel) near the touch panel by using a finger, a stylus, or another specified input tool, and the touch panel may generate an input signal according to the operation action of the user. The display interface of the terminal may show information such as the duration or the lyrics of the to-be-edited audio file to the terminal user, and may also receive numbers, characters, or gesture information entered by the terminal user, to generate signal input related to user setting or function control.

In some feasible implementation manners, when the terminal user opens an operation interface for editing an audio file, the terminal may display, on the display interface of the terminal, the duration of the to-be-edited audio file, and the lyrics and the waveform graph or the spectrum graph that are of the to-be-edited audio file and that correspond to the preset editing duration, and show the duration, the lyrics and the waveform graph or the spectrum graph to the terminal user by using the display interface of the terminal. When an audio file corresponding to the preset editing duration is not a segment needed by the terminal user, the terminal user may adjust the editing duration on the display interface according to a requirement of the terminal user. The terminal may receive a start moment and an end moment entered by the user, to adjust the editing duration, and display, on the display interface of the terminal, lyrics corresponding to the adjusted editing duration, for the user to determine audio file content corresponding to the editing duration.

In some feasible implementation manners, when entering an editing start point or end point, the user may perform operation action on the touch panel, for example, touch or slide on the touch panel, and the terminal may acquire a touch action of the user on the touch panel, and determine a touch point or a touch track of the user on the touch panel according to the touch action. The terminal may acquire the touch point of the user on the touch panel, and determine coordinates that are of the touch point and that are on the touch panel according to coordinates that are set on the touch panel, and the touch point may correspond to the editing start point or the editing end point of the to-be-edited audio file selected by the user. After acquiring the coordinates of the touch point, the terminal may determine, according to a preset correspondence between the coordinates of the touch panel and each moment in the duration of the to-be-edited audio file, a moment corresponding to the touch point, and may further adjust editing duration according to the moment corresponding to the touch point and with reference to the start moment and the end moment of the preset editing duration. For example, when the user touches one point or two points on the touch panel, the terminal may acquire coordinates that are of the touch points and that are on the touch panel, and determine, according to a correspondence between the coordinates of the touch panel and each moment in the duration of the to-be-edited audio file, moments t1 and/or t2 corresponding to the touch points. When t1 is close to a start moment t3 or t4 of the preset editing duration, t3 may be replaced with t1 (that is, t1 is set as the start moment of the editing duration), or t4 may be replaced with t1 (that is, t1 is set as the end moment of the editing duration), to obtain new editing duration. If the user selects two points that are on the touch panel and that correspond to moments t1 and t2 respectively, the terminal may determine, according to a relationship between t1 and t2 and the start moment and the end moment of the preset to-be-edited duration, a start moment and an end moment of the new editing duration, to obtain the new editing duration. The location of the touch point on the touch panel is not limited in this implementation manner, and may be a blank location of the touch panel, or may be a location on a timeline.

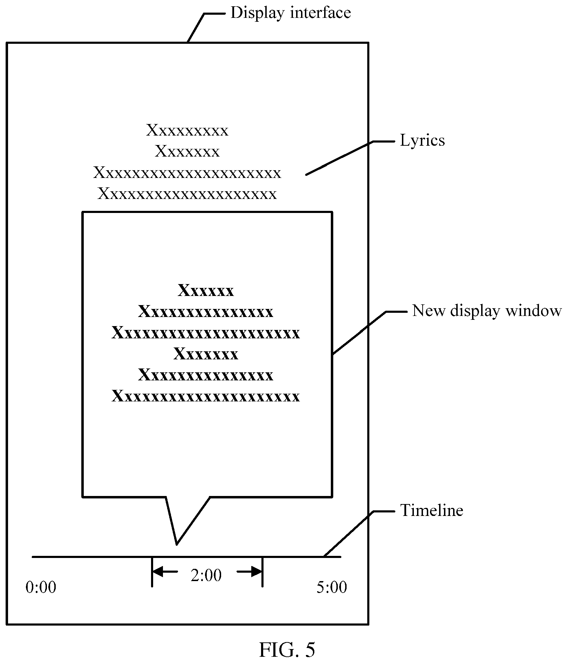

In some feasible implementation manners, the user may further slide on the touch panel, and select editing duration by sliding. Specifically, the user may draw a touch track on the touch panel, and use a length of the touch track to represent editing duration of an audio file needed by the user, and use a start point and an end point of the track to represent an editing start point and end point. The terminal may acquire the touch track on the touch panel, determine coordinates that are of the start point and the end point of the touch track and that are on the touch panel, and determine, according to a preset correspondence between the coordinates of the touch panel and each moment in the duration of the to-be-edited audio file, moments corresponding to the start point and the end point of the touch track. After acquiring the moments corresponding to the start point and the end point of the touch track, the terminal may adjust the editing duration according to the start moment and the end moment of the preset editing duration. For example, the start moment of the preset editing duration may be replaced with the time corresponding to the start point of the touch track, and the end moment of the preset editing duration may be replaced with the time corresponding to the end point of the touch track, to obtain new editing duration. For example, in FIG. 4, after the terminal displays, on the display interface of the terminal, the lyrics corresponding to the preset editing duration (1.5-minute duration), and shows the lyrics to the user, the user may determine whether the lyrics displayed by the terminal are the lyrics needed by the user, and if not, the user may adjust the editing duration (touch a moment that is behind the end moment corresponding to the to-be-edited duration, and prolong the editing duration to 2 minutes, as shown in FIG. 5). The terminal may adjust editing duration according to the start moment and the end moment entered by the user, that is, adjust 1.5 minutes to 2 minutes, and display, on the display interface of the terminal, lyrics corresponding to the adjusted editing duration, as shown in FIG. 5. The user may determine, according to the lyrics displayed on the display interface of the terminal, whether an audio file corresponding to editing duration that is between the start moment and the end moment entered by the user is an audio segment needed by the user, and further determine whether to finally determine the editing start moment and end moment. That is, in this embodiment of the present invention, when editing the audio file, the terminal user can see total duration of the to-be-edited audio file and a waveform graph or a spectrum graph corresponding to the to-be-edited audio file, can further see lyrics corresponding to each duration of the to-be-edited audio file, or even lyrics corresponding to each moment, and can further determine, according to content of the lyrics, whether an audio file corresponding to the selected editing duration is a segment needed by the terminal user. The terminal user can accurately determine, according to the lyrics displayed on the display interface of the terminal, content of the editing duration selected by the terminal user, and convert audio file editing into visual editing, thereby improving accuracy and efficiency of audio file editing.

S207: When the user determines a start moment and an end moment for final editing, acquire an audio file corresponding to editing duration that is between the start moment and the end moment.

In some feasible implementation manners, when determining, according to the lyrics displayed on the display interface, that an audio file corresponding to the editing duration selected by the terminal user is an audio segment that the terminal user likes, the terminal user may choose to save the audio file corresponding to the editing segment. In specific implementation, the terminal may set a saving button (or an acquiring button) on an operation interface that is for editing an audio file and that is displayed on the display interface, and when determining to save the audio file corresponding to the editing duration selected by the user, the user may touch or click the saving button. When detecting an input signal corresponding to the saving button, the terminal may acquire a current start moment and a current end moment that are selected by the user (that is, a start moment and an end moment that are for final editing and that are determined by the user), and save an audio file corresponding to editing duration that is between the start moment and the end moment. Specifically, the terminal may use a tool such as a media file cutting function pack (for example: MediaWriter) to clip out audio code stream information in the editing duration that is between the start moment and the end moment, and save the clipped out audio code stream information as a new audio file, that is, the audio file needed by the user. After clipping out the audio file (an audio file corresponding to the editing duration finally selected by the user), the terminal may save the audio file to a memory of the terminal, and the terminal user may set the audio file to a cell phone ringtone or an alarm.

In this embodiment of the present invention, a terminal may display, on a display interface of the terminal, duration of a to-be-edited audio file, and a waveform graph or a spectrum graph corresponding to the to-be-edited audio file, and may further display total duration of the to-be-edited audio file or lyrics corresponding to preset editing duration, for a user to determine, according to the lyrics displayed on the display interface, a location of an audio segment needed by the user, that is, the terminal user may determine, according to the lyrics displayed on the display interface, locations of a start point and an end point of an audio segment needed by the terminal user, and further adjust the preset editing duration. The terminal may determine editing duration of an audio file according to a start moment and an end moment entered by the user, and display, on the display interface of the terminal, the lyrics corresponding to the editing duration, to show the lyrics to the terminal user, for the terminal user to determine audio file content corresponding to the editing duration selected by the terminal user, and may further save an audio file corresponding to the editing duration determined by the user, thereby improving accuracy and efficiency of audio file editing, and enhancing user experience of an audio file editing function of the terminal.

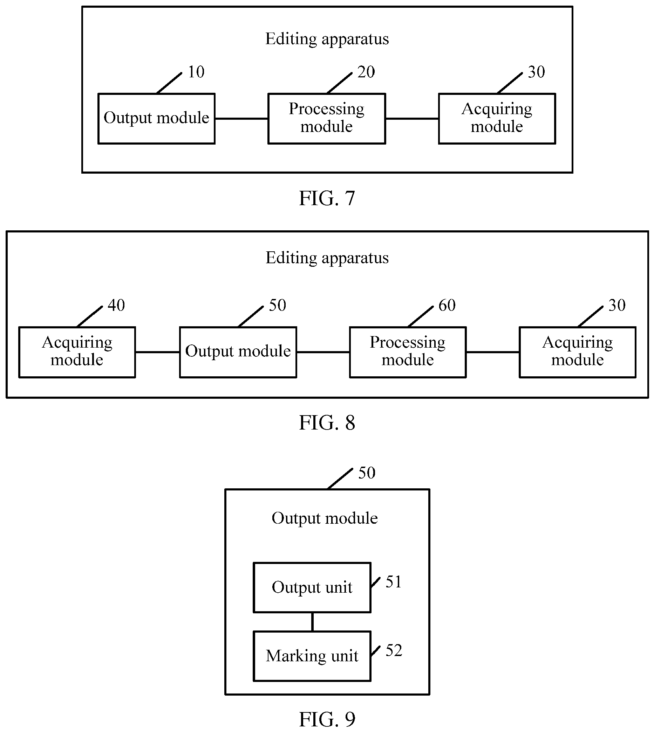

Referring to FIG. 7, FIG. 7 is a schematic structural diagram of a first embodiment of an apparatus for editing an audio file according to an embodiment of the present invention. The apparatus for editing an audio file described in this embodiment includes:
an output module 10, configured to display, on a display interface of a terminal, duration of a to-be-edited audio file, and display, on the display interface of the terminal, lyrics that are of the to-be-edited audio file and that correspond to preset editing duration;
a processing module 20, configured to adjust the editing duration according to a start moment and/or an end moment entered by a user, and display, on the display interface of the terminal by using the output module, lyrics corresponding to the adjusted editing duration, for the user to determine audio file content corresponding to the editing duration; and
an acquiring module 30, configured to: when the user determines a start moment and an end moment for final editing, acquire an audio file corresponding to editing duration that is between the start moment and the end moment.

The apparatus for editing an audio file described in this embodiment of the present invention may be specifically an electronic device applied to the terminal described in this embodiment of the present invention, or be specifically the terminal described in this embodiment of the present invention. A terminal is used as an example in the following embodiments for specific description.

In some feasible implementation manners, the terminal may first load a source file of the to-be-edited audio file to a memory of the terminal, so as to perform editing on the source file, and acquire an audio segment needed by a terminal user. In specific implementation, after loading the source file of the to-be-edited audio file, the terminal may parse the source file, and determine duration of the to-be-edited audio file, and may further display, by using the output module 10, the duration on the display interface of the terminal. The output module 10 of the terminal may display the duration of the to-be-edited audio file on the display interface by using a timeline, and show the duration to the terminal user. The terminal user may select an editing start point and end point according to the duration displayed on the timeline on the display interface of the terminal, and may further clip out an audio file needed by the terminal user. The timeline described in the embodiments of the present invention may be specifically a coordinate axis used to display a time, or a line used to display a time, or a bar diagram used to display a time, or the like, which is not limited herein. In this embodiment of the present invention, while loading the source file of the to-be-edited audio file to the memory of the terminal, the terminal may further load a lyric file of the to-be-edited audio file to the memory of the terminal. After loading the lyric file of the to-be-edited audio file, the terminal may parse the lyric file, and acquire a correspondence between lyrics and duration of the to-be-edited audio file, that is, lyrics corresponding to each moment in the duration of the to-be-edited audio file, and may further display corresponding lyrics according to editing duration selected by the user.

In some feasible implementation manners, after the terminal determines duration of the to-be-edited audio file, and displays, on the display interface of the terminal by using the output module 10, the duration of the to-be-edited audio file by using a timeline, the output module 10 may display, on the display interface of the terminal, lyrics that are of the to-be-edited audio file and that correspond to preset editing duration. That is, the terminal may preset duration (for example, duration of a refrain part) as default editing duration according to the duration of the to-be-edited audio file, and when the user opens an operation interface for editing an audio file, the output module 10 of the terminal may display, on the display interface of the terminal, the lyrics that are of the to-be-edited audio file and that correspond to the preset editing duration (that is, the default editing duration). Specifically, the terminal may determine the refrain part of the to-be-edited audio file according to data such as audio power of each moment of the to-be-edited audio file, to determine duration of the refrain part, and may further preset the duration of the refrain part as editing duration. The user may determine, according to the lyrics displayed on the display interface of the terminal, whether an audio file corresponding to the editing duration is a segment needed by the user, and if the audio file corresponding to the default editing duration is not the segment needed by the user, the user may enter an editing start moment and end moment according to a requirement of the user, and clip out the segment needed by the user, or adjust a start moment and an end moment of the default editing duration, until an audio file corresponding to the editing duration is the segment needed by the user. In specific implementation, for a specific implementation process of the output module, reference may be made to step S101 in the first embodiment of the method for editing an audio file provided in the embodiments of the present invention, which is not described again herein.

In some feasible implementation manners, the display interface of the terminal described in this embodiment of the present invention may be a touch panel of the terminal, or another man-machine interface. The touch panel may include a touch control screen or a touch screen, and may collect operation actions that the terminal user touches or approaches the touch panel. The user may perform an operation action on the touch panel or at a location (a range within which an action can be sensed by the touch panel) near the touch panel by using a finger, a stylus, or another specified input tool, and the touch panel may generate an input signal according to the operation action of the user. The display interface of the terminal may show information such as the duration or the lyrics of the to-be-edited audio file to the terminal user, and may also receive numbers, characters, or gesture information entered by the terminal user, to generate signal input related to user setting or function control.

In some feasible implementation manners, when the terminal user opens an operation interface for editing an audio file, the output module 10 may display, on the display interface of the terminal, the duration of the to-be-edited audio file and lyrics that are of the to-be-edited audio file and that correspond to the preset editing duration, and show the duration and the lyrics to the terminal user by using the display interface of the terminal. When an audio file corresponding to the preset editing duration is not a segment needed by the terminal user, the terminal user may adjust the editing duration on the display interface according to a requirement of the terminal user. The processing module 20 of the terminal may receive a start moment and/or an end moment entered by the user, to adjust the editing duration, and display, on the display interface of the terminal, lyrics corresponding to the adjusted editing duration, for the user to determine audio file content corresponding to the editing duration. The terminal user may determine, according to the lyrics displayed on the display interface of the terminal, whether an audio file corresponding to editing duration between the start moment and/or the end moment entered by the terminal user is the audio segment needed by the terminal user. That is, in this embodiment of the present invention, when editing an audio file, the terminal user can see lyrics corresponding to each duration of the to-be-edited audio file, or even lyrics corresponding to each moment, and may further determine, according to content of the lyrics, whether an audio file corresponding to the selected editing duration is the segment needed by the terminal user. The terminal user can accurately determine, according to the lyrics displayed on the display interface of the terminal, content of the editing duration selected by the terminal user, and converts audio file editing into visual editing, thereby improving accuracy and efficiency of audio file editing. In specifically implement, for a specific implementation process of the processing module, reference may be made to step S102 in the first embodiment of the method for editing an audio file provided in the embodiments of the present invention, which is not described again herein

In some feasible implementation manners, when determining, according to the lyrics displayed on the display interface, that an audio file corresponding to the editing duration selected by the terminal user is an audio segment that the terminal user likes, the terminal user may choose to acquire an audio file corresponding to the editing segment, and play or save the acquired audio file. In specific implementation, the terminal may set a saving button (or an acquiring button, where the saving button or the acquiring button is directly related to the acquiring module 30 of the terminal, and the acquiring module 30 may acquire an input signal on the saving button, and save a corresponding audio file according to the input signal) on an operation interface that is for editing an audio file and that is displayed on the display interface, and when determining to save the audio file corresponding to the editing duration selected by the user, the user may touch or click the saving button. When detecting an input signal corresponding to the saving button, the acquiring module 30 may acquire a current start moment and a current end moment that are selected by the user (that is, a start moment and an end moment that are for final editing and that are determined by the user), and save an audio file corresponding to editing duration that is between the start moment and the end moment. Specifically, the acquiring module 30 may use a tool such as a media file cutting function pack (for example: MediaWriter) to clip out audio code stream information in the editing duration that is between the start moment and the end moment, and save the clipped out audio code stream information as a new audio file, that is, the audio file needed by the user. After clipping out the audio file (an audio file corresponding to the editing duration finally selected by the user), the acquiring module 30 may save the audio file to a memory of the terminal, and the terminal user may set the audio file to a cell phone ringtone or an alarm. In specific implementation, for a specific implementation process of the acquiring module, reference may be made to step S103 in the first embodiment of the method for editing an audio file provided in the embodiments of the present invention, which is not described again herein.

In this embodiment of the present invention, the output module 10 of the terminal may display, on a display interface of the terminal, duration of a to-be-edited audio file, and lyrics corresponding to preset editing duration, for a user to determine, according to the lyrics displayed on the display interface, a location of an audio segment needed by the user, that is, the terminal user may determine, according to the lyrics displayed on the display interface, locations of a start point and an end point of an audio segment needed by the terminal user, and further adjust the editing duration. The processing module 20 of the terminal may determine editing duration of an audio file according to a start moment and/or an end moment entered by the user, and display, on the display interface of the terminal by using the output module 10, the lyrics corresponding to the editing duration, and show the lyrics to the terminal user, for the terminal user to determine audio file content corresponding to the editing duration selected by the terminal user, and the acquiring module 30 may save an audio file corresponding to the editing duration determined by the user, thereby improving accuracy and efficiency of audio file editing, and enhancing user experience of an audio file editing function of the terminal.

FIG. 8 is a schematic structural diagram of a second embodiment of an apparatus for editing an audio file according to an embodiment of the present invention. The apparatus for editing an audio file described in this embodiment includes:
an acquiring module 40, configured to acquire characteristic information of a to-be-edited audio file;
an output module 50, configured to display, on a display interface of a terminal, duration of the to-be-edited audio file, and display, on the display interface of the terminal, lyrics that are of the to-be-edited audio file and that correspond to preset editing duration;
a processing module 60, configured to adjust the editing duration according to a start moment and/or an end moment entered by a user, and display, on the display interface of the terminal by using the output module, lyrics corresponding to the adjusted editing duration, for the user to determine audio file content corresponding to the editing duration; and
an acquiring module 30, configured to: when the user determines a start moment and an end moment for final editing, acquire an audio file corresponding to editing duration that is between the start moment and the end moment.

In some feasible implementation manners, the output module 50 (in FIG. 9) includes:
an output unit 51, configured to display, on the display interface of the terminal, the duration of the to-be-edited audio file by using a timeline, and display, on the display interface of the terminal, lyrics that are of the to-be-edited audio file and that correspond to the duration; and
a marking unit 52, configured to mark the lyrics that are of the to-be-edited audio file and that correspond to the preset editing duration, and display, by using the output unit, the marked lyrics on the display interface of the terminal, to distinguish display of the lyrics corresponding to the editing duration and lyrics that fall outside the editing duration.

In some feasible implementation manners, the marking unit 52 is specifically configured to:
perform highlighting processing on the marked lyrics, and display, on a same display window of the display interface of the terminal by using the output unit, the lyrics on which highlighting processing has been performed and the lyrics corresponding to the duration of the to-be-edited audio file; or
perform highlighting processing on the marked lyrics, insert a new display window to a display window of the lyrics corresponding to the duration of the to-be-edited audio file, and display the marked lyrics on the new display window by using the output unit.

In some feasible implementation manners, the output module 50 is further specifically configured to:
correspondingly display, on the display interface of the terminal, a waveform graph or a spectrum graph of the to-be-edited audio file according to the timeline, for the user perform editing according to the waveform graph or the spectrum graph; and
mark a waveform graph or a spectrum graph corresponding to the preset editing duration, and display, on the display interface of the terminal, the marked waveform graph or spectrum graph and the marked lyrics.

In some feasible implementation manners, the output module 50 is specifically configured to:
perform highlighting processing on the marked waveform graph or spectrum graph and the lyrics, and correspondingly display the marked waveform graph or spectrum graph above the timeline; and
display, on a display window of the waveform graph or the spectrum graph, the lyrics corresponding to the duration of the to-be-edited audio file and the lyrics on which highlighting processing has been performed and that are included in the to-be-edited audio file.

In some feasible implementation manners, the processing module 60 is specifically configured to:
acquire a touch point of the user on a touch panel of the terminal, and determine coordinates that are of the touch point and that are on the touch panel, where the touch point corresponds to an editing start point or end point of the to-be-edited audio file;
determine, according to a preset correspondence between coordinates of the touch panel and each moment in the duration of the to-be-edited audio file, a moment corresponding to the touch point; and
adjust the editing duration according to the moment corresponding to the touch point, and the start moment and the end moment of the preset editing duration, where
the touch panel of the terminal includes: a touch screen or a touch control screen of the terminal.

In some feasible implementation manners, the processing module 60 is specifically configured to:
acquire a touch track of the user on a touch panel of the terminal, and determine coordinates that are of a start point and an end point of the touch track and that are on the touch panel, where the start point and the end point of the touch track correspond to an editing start point and end point of the to-be-edited audio file;
determine, according to a preset correspondence between coordinates of the touch panel and each moment in the duration of the to-be-edited audio file, moments corresponding to the start point and the end point of the touch track; and
adjust the editing duration according to the moments corresponding to the start point and the end point of the touch track, and the start moment and the end moment of the preset editing duration, where
the touch panel of the terminal includes: a touch screen or a touch control screen of the terminal.

In some feasible implementation manners, the to-be-edited audio file described in this embodiment of the present invention is an audio file that a terminal user wants to edit, for example, a song that the terminal user likes, or the like. The user may perform editing on the to-be-edited audio file, and clip, out of the to-be-edited audio file, an audio file corresponding to editing duration selected by the user, to use the clipped out audio file as a cell phone ringtone, an alarm or the like of the user. In specific implementation, the characteristic information that is of the to-be-edited audio file and acquired by the acquiring module 40 may include: the duration, the lyrics, and the waveform graph or the spectrum graph of the to-be-edited audio file.

In some feasible implementation manners, before editing an audio file, the terminal user may first download a to-be-edited audio file (for example, a song that the terminal user likes) into memory of the terminal by using the acquiring module 40, that is, the terminal may first load a source file of the to-be-edited audio file to the memory of the terminal by using the acquiring module 40, so as to perform editing on the source file, and acquire an audio segment needed by the terminal user. In specific implementation, after loading the source file of the to-be-edited audio file, the acquiring module 40 may parse the source file, and determine duration of the to-be-edited audio file, and may further display, by using the output module 50, on the display interface of the terminal, the duration of the to-be-edited audio file. After loading the source file of the to-be-edited audio file, the acquiring module 40 may further parse the source file, and draw, according to the source file, a waveform graph or a spectrum graph corresponding to the duration of the to-be-edited audio file. For example, the acquiring module 40 may perform calculation by using a media stream analysis technology (for example, Fourier transform) and according to the source file of the to-be-edited audio file and PCM data that corresponds to each time point (that is, a moment) in the source file, and then draw the waveform graph or the spectrum graph of the to-be-edited audio file, that is, the acquiring module 40 draws a waveform graph or a spectrum graph corresponding to the duration of the to-be-edited audio file, and displays, by using the output module 50, the waveform graph or the spectrum graph above a timeline that is on the display interface of the terminal and that displays the duration of the to-be-edited audio file. In this embodiment of the present invention, the waveform graph or the spectrum graph of the to-be-edited audio file is a set of power corresponding to each moment in the duration of the to-be-edited audio file, and when the duration of the to-be-edited audio file is a period of continuous time, the set of power corresponding to each moment may present the waveform graph or the spectrum graph of the to-be-edited audio file. After drawing the waveform graph or the spectrum graph of the to-be-edited audio file according to the timeline, the terminal may correspondingly display the waveform graph or the spectrum graph on the display interface of the terminal, and display the waveform graph or the spectrum graph above the timeline that displays the duration of the to-be-edited audio file, that is, may display power, of each moment that is in the duration of the to-be-edited audio file, in the continuous time on the timeline.

In some feasible implementation manners, while loading the source file of the to-be-edited audio file to the memory of the terminal, the acquiring module 40 may further load a lyric file of the to-be-edited audio file to the memory of the terminal. After loading the lyric file of the to-be-edited audio file, the acquiring module 40 may parse the lyric file, and acquire a correspondence between lyrics and duration of the to-be-edited audio file, that is, lyrics corresponding to each moment in the duration of the to-be-edited audio file, and may further display corresponding lyrics according to editing duration selected by the user. The correspondence between lyrics of the to-be-edited audio file and duration of the to-be-edited audio file is used to determine lyrics corresponding to any editing duration in the to-be-edited audio file, and the processing module 60 of the terminal may determine, according to the correspondence, the lyrics corresponding to any duration selected by the terminal user. After the acquiring module 40 acquires the duration, the waveform graph, or the spectrum graph of the to-be-edited audio file, when the terminal user opens an operation interface for editing an audio file, the terminal may display, by using the output module 50, on the display interface of the terminal, characteristic information acquired by the acquiring module 40, such as the duration, the waveform graph or the spectrum graph of the to-be-edited audio file, and show the characteristic information to the terminal user, and the terminal user may perform editing on the to-be-edited audio file according to the characteristic information displayed on the operation interface (which is specifically the display interface of the terminal), and set audio file editing to visual editing, thereby improving accuracy and efficiency of audio file editing. In specific implementation, for a specific implementation process of the acquiring module, reference may be made to step S201 in the second embodiment of the method for editing an audio file provided in the embodiments of the present invention, which is not described again herein.

In some feasible implementation manners, the output module 50 may display, on the display interface of the terminal, the duration of the to-be-edited audio file by using a timeline, and show the duration to the terminal user. The terminal user may select an editing start point and end point according to the duration displayed on the timeline on the display interface of the terminal, and may further clip out an audio file needed by the terminal user. In specific implementation, while displaying the duration of the audio file on the display interface by using the timeline, the output unit 51 of the output module 50 may further display lyrics corresponding to the duration on the display interface. For example, if total duration of the to-be-edited audio file is five minutes, the output unit 51 may display five-minute duration on the display interface of the terminal by using the timeline, and display lyrics (lyrics of an entire song) corresponding to the five-minute duration on the display interface. As shown in FIG. 3, in this embodiment of the present invention, before displaying, on the display interface of the terminal, lyrics of the to-be-edited audio file, the terminal may further preset duration (for example, duration of a refrain part or total duration of the to-be-edited audio file) as default editing duration according to the duration of the to-be-edited audio file by using the output module 50, and when the user opens an operation interface for editing an audio file, the terminal may display, on the display interface of the terminal by using the output module 50, lyrics that are of the to-be-edited audio file and that correspond to the preset editing duration (that is, the default editing duration). Specifically, the terminal may determine the refrain part of the to-be-edited audio file according to data such as audio power of each moment of the to-be-edited audio file, to determine duration of the refrain part, and may further preset the duration of the refrain part as editing duration. Specifically, the output module 50 may mark, by using the marking unit 52, the lyrics corresponding to the preset editing duration of the terminal, to distinguish display of the lyrics corresponding to the preset editing duration and lyrics that fall outside the editing duration and that are in the total duration of the to-be-edited audio file, and further display, by using the output unit 51, the marked lyrics on the display interface of the terminal. In this embodiment of the present invention, the editing duration may be less than or equal to the duration (that is, the total duration) of the to-be-edited audio file, that is, the editing duration may be the total duration of the to-be-edited audio file, or may be a segment of the to-be-edited audio file.

In some feasible implementation manners, when displaying, on the display interface of the terminal, the lyrics (that is, the marked lyrics) corresponding to the preset editing duration (for example, a two-minute refrain part), the output unit 51 of the output module 50 may perform highlighting processing on the marked lyrics by using the marking unit 52, and display, on a same display window on the display interface of the terminal, the lyrics corresponding to the duration of to-be-edited audio file, as shown in FIG. 6. In addition, after performing highlighting processing on the lyrics corresponding to the preset editing duration, the marking unit 52 may further insert a new display window on the display window of lyrics (lyrics of an entire song) corresponding to duration (total duration) of the to-be-edited audio file, and display the marked lyrics on the new display window by using the output unit 51, as shown in FIG. 4. In this embodiment of the present invention, the highlighting processing performed on the marked lyrics by the marking unit 52 may include a processing manner such as using a bold font, coloring, or floating, that is, the marking unit 52 may display, by using the highlighting processing manner, the marked lyrics on the display interface of the terminal in a highlighting manner by using the output unit 51, to be distinguished from lyrics of another part, and the user may rapidly determine lyrics corresponding to the duration selected by the user. The floating processing may be specifically performing staggered displaying on the marked lyrics and the other lyrics, for example, setting a display layer of the marked lyrics to be above a display layer of the other lyrics, or the like.

In some feasible implementation manners, while displaying, on the display interface of the terminal, the duration of the to-be-edited audio file, the output module 50 may further display a waveform graph or a spectrum graph of the to-be-edited audio file above a timeline that displays duration, for the terminal user to perform editing according to the waveform graph or the spectrum graph. Specifically, the output module 50 may mark the waveform graph or the spectrum graph corresponding to the preset editing duration, and display, on the display interface of the terminal, the marked waveform graph or spectrum graph and the marked lyrics. The output module 50 may perform highlighting processing on the marked waveform graph or spectrum graph, and display, above the timeline that displays the duration of the to-be-edited audio file, the waveform graph or the spectrum graph on which highlighting processing has been performed, and may further display, on the display window of the waveform graph or the spectrum graph, lyrics corresponding to the total duration of the to-be-edited audio file and lyrics (lyrics corresponding to the editing duration) on which highlighting processing has been performed and that are included in the total duration, as shown in FIG. 6. The highlighting processing performed on the waveform graph or the spectrum graph may include: using a bold font, coloring, floating, or the like, to distinguish the part of the waveform graph or the spectrum graph corresponding to the editing duration from the waveform graph or the spectrum graph that falls outside the editing duration. In specific implementation, after the output module 50 of the terminal displays, on the display interface of the terminal, information such as the waveform graph or spectrum graph, and the lyrics that correspond to the preset editing duration, the user may determine, according to the lyrics displayed on the display interface of the terminal, whether an audio file corresponding to the editing duration is a segment needed by the user, and if the audio file corresponding to the default editing duration is not the segment needed by the user, the user may enter an editing start moment and end moment according to a requirement of the user, and clip out the segment needed by the user, or adjust a start moment and an end moment of the default editing duration, until an audio file corresponding to the editing duration is the segment needed by the user. In specific implementation, for a specific implementation process of the output module, reference may be made to steps S202-S205 in the second embodiment of the method for editing an audio file provided in the embodiments of the present invention, which is not described again herein.

In some feasible implementation manners, the display interface of the terminal described in this embodiment of the present invention may be a touch panel of the terminal, or another man-machine interface. The touch panel may include a touch control screen or a touch screen, and may collect operation actions that the terminal user touches or approaches the touch panel. The user may perform an operation action on the touch panel or at a location (a range within which an action can be sensed by the touch panel) near the touch panel by using a finger, a stylus, or another specified input tool, and the touch panel may generate an input signal according to the operation action of the user. The display interface of the terminal may show information such as the duration or the lyrics of the to-be-edited audio file to the terminal user, and may also receive numbers, characters, or gesture information entered by the terminal user, to generate signal input related to user setting or function control.

In some feasible implementation manners, when the terminal user opens an operation interface for editing an audio file, the terminal may display, on the display interface of the terminal, by using the output module 50, the duration of the to-be-edited audio file, and the lyrics and the waveform graph or the spectrum graph that are of the to-be-edited audio file and that correspond to the preset editing duration, and show the duration, the lyrics and the waveform graph or the spectrum graph to the terminal user by using the display interface of the terminal. When an audio file corresponding to the preset editing duration is not a segment needed by the terminal user, the terminal user may adjust the editing duration on the display interface according to a requirement of the terminal user. The processing module 60 of the terminal may receive a start moment and an end moment entered by the user, to adjust the editing duration, and display, by using the output module 50, on the display interface of the terminal, lyrics corresponding to the adjusted editing duration, for the user to determine audio file content corresponding to the editing duration. In some feasible implementation manners, when entering an editing start point or end point, the user may perform operation action on the touch panel, for example, touch or slide on the touch panel, and the processing module 60 of the terminal may acquire a touch action of the user on the touch panel, and determine a touch point or a touch track of the user on the touch panel according to the touch action. The processing module 60 may acquire the touch point of the user on the touch panel, and determine coordinates that are of the touch point and that are on the touch panel according to coordinates that are set on the touch panel, and the touch point may correspond to the editing start point or the editing end point of the to-be-edited audio file selected by the user. After acquiring the coordinates of the touch point, the processing module 60 may determine, according to a preset correspondence between the coordinates of the touch panel and each moment in the duration of the to-be-edited audio file, a moment corresponding to the touch point, and may further adjust editing duration according to the moment corresponding to the touch point and with reference to the start moment and the end moment of the preset editing duration. For example, when the user touches one point or two points on the touch panel, the processing module 60 may acquire coordinates that are of the touch point and that are on the touch panel, and determine, according to a correspondence between the coordinates of the touch panel and each moment in the duration of the to-be-edited audio file, moments t1 and/or t2 corresponding to the touch points. When t1 is close to a start time t3 or t4 of the preset editing duration, the processing module 60 may replace t3 with t1 (that is, t1 is set as the start moment of the editing duration), or replace t4 with t1 (that is, t1 is set as the end moment of the editing duration), to obtain new editing duration. If the user selects two points that are on the touch panel and that correspond to moments t1 and t2 separately, the processing module 60 may determine, according to a relationship between t1 and t2 and the start moment and the end moment of the preset editing duration, a start moment and an end moment of the new editing duration, to obtain the new editing duration.

In some feasible implementation manners, the user may further slide on the touch panel, and select editing duration by sliding. Specifically, the user may draw a touch track on the touch panel, and use a length of the touch track to represent editing duration of an audio file needed by the user, and use a start point and an end point of the track to represent an editing start point and end point. The processing module 60 of the terminal may acquire the touch track on the touch panel, determine coordinates of the start point and the end point of the touch track on the touch panel, and determine, according to a preset correspondence between the coordinates of the touch panel and each moment in the duration of the to-be-edited audio file, moments corresponding to the start point and the end point of the touch track. After acquiring the moments corresponding to the start point and the end point of the touch track, the processing module 60 may adjust the editing duration according to the start moment and the end moment of the preset editing duration. For example, the processing module 60 may replace the start moment of the preset editing duration with the time corresponding to the start point of the touch track, and replace the end moment of the preset editing duration with the time corresponding to the end point of the touch track, to obtain new editing duration.

Specifically, the processing module 60 may determine, according to a correspondence between lyrics that are of the to-be-edited audio file and that are obtained by the acquiring module 40 through processing and the duration of the to-be-edited audio file, lyrics corresponding to editing duration selected by the terminal user, and display, by using the output module 50, the lyrics on the display interface of the terminal. For example, in FIG. 4, after the terminal displays, by using the output module 50, on the display interface of the terminal, the lyrics corresponding to the preset editing duration (1.5-minute duration), and shows the lyrics to the user, the user may determine whether the lyrics displayed by the terminal are the lyrics needed by the user, and if not, the user may adjust the editing duration (touch a moment that is behind the end moment corresponding to the to-be-edited duration, and prolong the editing duration to 2 minutes, as shown in FIG. 5). The processing module 60 of the terminal may adjust editing duration according to the start moment and the end moment entered by the user, that is, adjust 1.5 minutes to 2 minutes, determine, according to a correspondence between lyrics of the to-be-edited audio file and duration of the to-be-edited audio file, lyrics corresponding to the adjusted editing duration, and display, by using the output module 50, on the display interface of the terminal, lyrics corresponding to the adjusted editing duration, as shown in FIG. 5. The user may determine, according to the lyrics displayed on the display interface of the terminal, whether an audio file corresponding to editing duration that is between the start moment and the end moment entered by the user is an audio segment needed by the user, and further determine whether to finally determine the editing start moment and end moment. That is, in this embodiment of the present invention, when editing the audio file, the terminal user can see total duration of the to-be-edited audio file and a waveform graph or a spectrum graph corresponding to the to-be-edited audio file, can further see lyrics corresponding to each duration of the to-be-edited audio file, or even lyrics corresponding to each moment, and can further determine, according to content of the lyrics, whether an audio file corresponding to the selected editing duration is the segment needed by the terminal user. The terminal user can accurately determine, according to the lyrics displayed on the display interface of the terminal, content of the editing duration selected by the terminal user, and convert audio file editing into visual editing, thereby improving accuracy and efficiency of audio file editing. In specific implementation, for a specific implementation process of the processing module, reference may be made to step S206 in the second embodiment of the method for editing an audio file provided in the embodiments of the present invention, which is not described again herein.

In some feasible implementation manners, when determining, according to the lyrics displayed on the display interface, that an audio file corresponding to the editing duration selected by the terminal user is an audio segment that the terminal user likes, the terminal user may choose to save the audio file corresponding to the editing segment. In specific implementation, the terminal may set a saving button (or an acquiring button, where the save button or the acquiring button is directly related to the acquiring module 30 of the terminal, the acquiring module 30 may acquire an input signal on the saving button, and save a corresponding audio file according to the input signal) on an operation interface that is for editing an audio file and that is displayed on the display interface, and when determining to save the audio file corresponding to the editing duration selected by the user, the user may touch or click the saving button. When detecting an input signal corresponding to the saving button, the acquiring module 30 may acquire a current start moment and a current end moment selected by the user (that is, a start moment and an end moment that are for final editing and that are determined by the user), and save an audio file corresponding to editing duration that is between the start moment and the end moment. Specifically, the acquiring module 30 may use a tool such as a media file cutting function pack (for example: MediaWriter) to clip out audio code stream information in the editing duration that is between the start moment and the end moment, and save the clipped out audio code stream information as a new audio file, that is, the audio file needed by the user. After clipping out the audio file (an audio file corresponding to the editing duration finally selected by the user), the acquiring module 30 may save the audio file to a memory of the terminal, and the terminal user may set the audio file to a cell phone ringtone or an alarm. In specific implementation, for a specific implementation process of the acquiring module, reference may be made to step S207 in the second embodiment of the method for editing an audio file provided in the embodiments of the present invention, which is not described again herein.

In this embodiment of the present invention, a terminal may display, on a display interface of the terminal, duration of a to-be-edited audio file, and a waveform graph or a spectrum graph corresponding to the to-be-edited audio file, and may further display total duration of the to-be-edited audio file or lyrics corresponding to preset editing duration, for a user to determine, according to the lyrics displayed on the display interface, a location of an audio segment needed by the user, that is, the terminal user may determine, according to the lyrics displayed on the display interface, locations of a start point and an end point of an audio segment needed by the terminal user, and further adjust the preset editing duration. The terminal may determine editing duration of an audio file according to a start moment and an end moment entered by the user, and display, on the display interface of the terminal, the lyrics corresponding to the editing duration, and show the lyrics to the terminal user, for the terminal user to determine audio file content corresponding to the editing duration selected by the terminal user, and may further save an audio file corresponding to the editing duration determined by the user, thereby improving accuracy and efficiency of audio file editing, and enhancing user experience of an audio file editing function of the terminal.

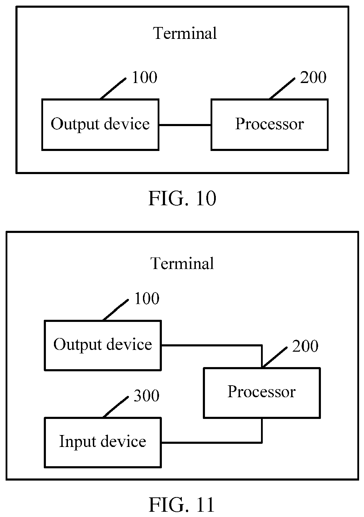

FIG. 10 is a schematic structural diagram of an embodiment of a terminal according to an embodiment of the present invention. The terminal described in this embodiment may be configured to execute steps of the method in FIG. 1 or FIG. 2, and the terminal includes: an output device 100 and a processor 200, where the output device 100 is connected to the processor 200.

The output device 100 is configured to display, on a display interface of the terminal, duration of a to-be-edited audio file, and display, on the display interface of the terminal, lyrics that are of the to-be-edited audio file and that correspond to preset editing duration.

The processor 200 is configured to adjust the editing duration according to a start moment and/or an end moment entered by a user, and display, on the display interface of the terminal by using the output device, lyrics corresponding to the adjusted editing duration, for the user to determine audio file content corresponding to the editing duration.

The processor 200 is further configured to: when the user determines a start moment and an end moment for final editing, acquire an audio file corresponding to editing duration that is between the start moment and the end moment.

In some feasible implementation manners, the output device 100 is specifically configured to:
display, on the display interface of the terminal, the duration of the to-be-edited audio file by using a timeline, and display, on the display interface of the terminal, lyrics that are of the to-be-edited audio file and that correspond to the duration; and
mark the lyrics that are of the to-be-edited audio file and that correspond to the preset editing duration, and display the marked lyrics on the display interface of the terminal, to distinguish display of the lyrics corresponding to the editing duration and lyrics that fall outside the editing duration, where
the editing duration is less than or equal to the duration of the to-be-edited audio file.

In some feasible implementation manners, the output device 100 is specifically configured to:
perform highlighting processing on the marked lyrics, and display, on a same display window of the display interface of the terminal, the lyrics on which highlighting processing has been performed and the lyrics corresponding to the duration of the to-be-edited audio file; or
perform highlighting processing on the marked lyrics, insert a new display window to a display window of the lyrics corresponding to the duration of the to-be-edited audio file, and display the marked lyrics on the new display window.

In some feasible implementation manners, the output device 100 is specifically configured to:
correspondingly display, on the display interface of the terminal, a waveform graph or a spectrum graph of the to-be-edited audio file according to the timeline, for the user to perform editing according to the waveform graph or the spectrum graph; and
mark a waveform graph or a spectrum graph corresponding to the preset editing duration, and display, on the display interface of the terminal, the marked waveform graph or spectrum graph and the marked lyrics.

In some feasible implementation manners, the output device 100 is specifically configured to:
perform highlighting processing on the marked waveform graph or spectrum graph and the lyrics, and correspondingly display the marked waveform graph or spectrum graph above the timeline; and
display, on a display window of the waveform graph or the spectrum graph, the lyrics corresponding to the duration of the to-be-edited audio file and the lyrics on which highlighting processing has been performed and that are included in the to-be-edited audio file.

In some feasible implementation manners, the terminal further includes an input device 300 (as shown in FIG. 11), where the input device 300 is connected to the processor 200;
the input device 300 is configured to acquire a touch point of the user on a touch panel of the terminal, and determine coordinates that are of the touch point and that are on the touch panel, where the touch point corresponds to an editing start point or end point of the to-be-edited audio file; and
the processor 200 is specifically configured to:
determine, according to a preset correspondence between coordinates of the touch panel and each moment in the duration of the to-be-edited audio file, a moment corresponding to the touch point acquired by the input device; and
adjust the editing duration according to the moment corresponding to the touch point, and the start moment and the end moment of the preset editing duration.

In some feasible implementation manners, the terminal further includes an input device 300 (as shown in FIG. 11), where the input device 300 is connected to the processor 200;
the input device 300 is configured to acquire a touch track of the user on a touch panel of the terminal, and determine coordinates of the start point and the end point of the touch track on the touch panel, where the start point and the end point of the touch track correspond to an editing start point and end point of the to-be-edited audio file; and
the processor 200 is specifically configured to:
determine, according to a preset correspondence between coordinates of the touch panel and each moment in the duration of the to-be-edited audio file, moments corresponding to the start point and the end point of the touch track determined by the input device; and
adjust the editing duration according to the moments corresponding to the start point and the end point of the touch track, and the start moment and the end moment of the preset editing duration.

In some feasible implementation manners, the processor 200 is further specifically configured to:
acquire characteristic information of the to-be-edited audio file.

In specific implementation, the terminal described in this embodiment of the present invention may be specifically an apparatus for editing an audio file provided in the embodiments of the present invention, or a device that includes the apparatus for editing an audio file provided in the embodiments of the present invention, and the method for editing an audio file described in the embodiments of the present invention may be applied to the terminal. The output device 100 or the input device 300 described in this embodiment of the present invention may be specifically a touch panel of the terminal described in this embodiment of the present invention, and include a touch screen or a touch control. In addition, the output device 100 described in this embodiment of the present invention may also be a display of the terminal described in this embodiment of the present invention, which is not limited herein. For a specific implementation process of the terminal described in this embodiment of the present invention, reference may be made to the first embodiment and the second embodiment of the method for editing an audio file provided in the embodiments of the present invention, or the specific implementation manners described in the first embodiment and the second embodiment of the apparatus for editing an audio file provided in the embodiments of the present invention, which is not described again herein.

The foregoing method for editing an audio file disclosed in the embodiments of the present invention may be applied to a terminal, and may be specifically implemented by using a hardware module such as an input device, an output device, and a processor in the terminal. In an implementation process, steps in the foregoing methods can be implemented by using an input device, an output device, and a hardware integrated logical circuit in the processor, or by using instructions in a form of software. The processor may be a general processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of the present invention. The universal processor may be a microprocessor or any conventional processor or the like. The steps of the method disclosed with reference to the embodiments of the present invention may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, a register, or the like.

It should be understood that, "one embodiment" or "an embodiment" in the whole specification means that specific characteristics, structures or features related to the embodiment are included in at least one embodiment of the present invention. Therefore, "in one embodiment" or "in an embodiment" appears in the whole specification does not necessarily refer to a same embodiment. In addition, these specific characteristics, structures or features may be combined in one or more embodiments in any suitable manner. Sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

It should be understood that in the embodiments of the present invention, "B corresponding to A" indicates that B is associated with A, and B may be determined according to A. However, it should further be understood that determining A according to B does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing base station, device, and module, reference may be made to a corresponding process in the foregoing method embodiments, and details are not described herein again.

In the several embodiments provided in the present application, it should be understood that the disclosed apparatus and method may be implemented in other manners. For example, the described apparatus embodiment is merely exemplary. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In addition, function units (or function modules) in the embodiments of the present invention may be integrated into one processing unit, or each of the units may exist alone physically, or two or more units are integrated into one unit. The integrated unit may be implemented in a form of hardware, or may be implemented in a form of a software functional unit.

With descriptions of the foregoing embodiments, a person skilled in the art may clearly understand that the present invention may be implemented by hardware, firmware or a combination thereof. When the present invention is implemented by software, the foregoing functions may be saved in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or save expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital STA line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely exemplary embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A method for editing an audio file, comprising:
displaying, on a display interface of a terminal, duration of a to-be-edited audio file, and displaying, on the display interface of the terminal, lyrics that are of the to-be-edited audio file and that correspond to preset editing duration;
adjusting the editing duration according to a start moment and/or an end moment entered by a user, and displaying, on the display interface of the terminal, lyrics corresponding to the adjusted editing duration, for the user to determine audio file content corresponding to the editing duration; and
when the user determines a start moment and an end moment for final editing, acquiring an audio file corresponding to editing duration that is between the start moment and the end moment.

2. The method according to claim 1, wherein the displaying, on a display interface of a terminal, duration of a to-be-edited audio file, and displaying, on the display interface of the terminal, lyrics that are of the to-be-edited audio file and that correspond to preset editing duration comprises:
displaying, on the display interface of the terminal, the duration of the to-be-edited audio file by using a timeline, and displaying, on the display interface of the terminal, lyrics that are of the to-be-edited audio file and that correspond to the duration; and
marking the lyrics that are of the to-be-edited audio file and that correspond to the preset editing duration, and displaying the marked lyrics on the display interface of the terminal, to distinguish display of the lyrics corresponding to the editing duration and lyrics that fall outside the editing duration, wherein
the editing duration is less than or equal to the duration of the to-be-edited audio file.

3. The method according to claim 2, wherein the displaying the marked lyrics on the display interface of the terminal comprises:
performing highlighting processing on the marked lyrics, and displaying, on a same display window of the display interface of the terminal, the lyrics on which highlighting processing has been performed and the lyrics corresponding to the duration of the to-be-edited audio file; or
performing highlighting processing on the marked lyrics, inserting a new display window to a display window of the lyrics corresponding to the duration of the to-be-edited audio file, and displaying the marked lyrics on the new display window, wherein
the highlighting processing comprises: at least one of using a bold font, coloring, or floating.

4. The method according to any one of claims 1 to 3, wherein after the displaying, on a display interface of a terminal, duration of a to-be-edited audio file, the method further comprises:
correspondingly displaying, on the display interface of the terminal, a waveform graph or a spectrum graph of the to-be-edited audio file according to the timeline, for the user to perform editing according to the waveform graph or the spectrum graph; and
marking a waveform graph or a spectrum graph corresponding to the preset editing duration, and displaying, on the display interface of the terminal, the marked waveform graph or spectrum graph and the marked lyrics.

5. The method according to claim 4, wherein the displaying, on the display interface of the terminal, the marked waveform graph or spectrum graph and the marked lyrics comprises:
performing highlighting processing on the marked waveform graph or spectrum graph and the lyrics, and correspondingly displaying the marked waveform graph or spectrum graph above the timeline; and
displaying, on a display window of the waveform graph or the spectrum graph, the lyrics corresponding to the duration of the to-be-edited audio file, and the lyrics on which highlighting processing has been performed and that are comprised in the to-be-edited audio file, wherein
the highlighting processing comprises: at least one of using a bold font, coloring, or floating.

6. The method according to any one of claims 1 to 5, wherein the adjusting the editing duration according to a start moment and/or an end moment entered by a user comprises:
acquiring a touch point of the user on a touch panel of the terminal, and determining coordinates that are of the touch point and that are on the touch panel, wherein the touch point corresponds to an editing start point or end point of the to-be-edited audio file;
determining, according to a preset correspondence between coordinates of the touch panel and each moment in the duration of the to-be-edited audio file, a moment corresponding to the touch point; and
adjusting the editing duration according to the moment corresponding to the touch point, and the start moment and the end moment of the preset editing duration, wherein
the touch panel of the terminal comprises: a touch screen or a touch control screen of the terminal.

7. The method according to any one of claims 1 to 5, wherein the adjusting the editing duration according to a start moment and/or an end moment entered by a user comprises:
acquiring a touch track of the user on a touch panel of the terminal, and determining coordinates that are of a start point and an end point of the touch track and that are on the touch panel, wherein the start point and the end point of the touch track correspond to an editing start point and end point of the to-be-edited audio file;
determining, according to a preset correspondence between coordinates of the touch panel and each moment in the duration of the to-be-edited audio file, moments corresponding to the start point and the end point of the touch track; and
adjusting the editing duration according to the moments corresponding to the start point and the end point of the touch track, and the start moment and the end moment of the preset editing duration, wherein
the touch panel of the terminal comprises: a touch screen or a touch control screen of the terminal.

8. The method according to any one of claims 1 to 7, wherein before the displaying, on a display interface of a terminal, duration of a to-be-edited audio file, the method further comprises:
acquiring characteristic information of the to-be-edited audio file, wherein
the characteristic information comprises the duration, the lyrics, and the waveform graph or the spectrum graph.

9. An apparatus for editing an audio file, comprising:
an output module, configured to display, on a display interface of a terminal, duration of a to-be-edited audio file, and display, on the display interface of the terminal, lyrics that are of the to-be-edited audio file and that correspond to preset editing duration;
a processing module, configured to adjust the editing duration according to a start moment and/or an end moment entered by a user, and display, on the display interface of the terminal by using the output module, lyrics corresponding to the adjusted editing duration, for the user to determine audio file content corresponding to the editing duration; and
an acquiring module, configured to: when the user determines a start moment and an end moment for final editing, acquire an audio file corresponding to editing duration that is between the start moment and the end moment.

10. The apparatus according to claim 9, wherein the output module comprises:
an output unit, configured to display, on the display interface of the terminal, the duration of the to-be-edited audio file by using a timeline, and display, on the display interface of the terminal, lyrics that are of the to-be-edited audio file and that correspond to the duration; and
a marking unit, configured to mark the lyrics that are of the to-be-edited audio file and that correspond to the preset editing duration, and display, by using the output unit, the marked lyrics on the display interface of the terminal, to distinguish display of the lyrics corresponding to the editing duration and lyrics that fall outside the editing duration, wherein
the editing duration is less than or equal to the duration of the to-be-edited audio file.

11. The apparatus according to claim 10, wherein the marking unit is specifically configured to:
perform highlighting processing on the marked lyrics, and display, on a same display window of the display interface of the terminal by using the output unit, the lyrics on which highlighting processing has been performed and the lyrics corresponding to the duration of the to-be-edited audio file; or
perform highlighting processing on the marked lyrics, insert a new display window to a display window of the lyrics corresponding to the duration of the to-be-edited audio file, and display the marked lyrics on the new display window by using the output unit, wherein
the highlighting processing comprises: at least one of using a bold font, coloring, or floating.

12. The apparatus according to any one of claims 9 to 11, wherein the output module is further specifically configured to:
correspondingly display, on the display interface of the terminal, a waveform graph or a spectrum graph of the to-be-edited audio file according to the timeline, for the user to perform editing according to the waveform graph or the spectrum graph; and
mark a waveform graph or a spectrum graph corresponding to the preset editing duration, and display, on the display interface of the terminal, the marked waveform graph or spectrum graph and the marked lyrics.

13. The apparatus according to claim 12, wherein the output module is further specifically configured to:
perform highlighting processing on the marked waveform graph or spectrum graph and the lyrics, and correspondingly display the marked waveform graph or spectrum graph above the timeline; and
display, on a display window of the waveform graph or the spectrum graph, the lyrics corresponding to the duration of the to-be-edited audio file, and the lyrics on which highlighting processing has been performed and that are comprised in the to-be-edited audio file, wherein
the highlighting processing comprises: at least one of using a bold font, coloring, or floating.

14. The apparatus according to any one of claims 9 to 13, wherein the processing module is specifically configured to:
acquire a touch point of the user on a touch panel of the terminal, and determine coordinates that are of the touch point and that are on the touch panel, wherein the touch point corresponds to an editing start point or end point of the to-be-edited audio file;
determine, according to a preset correspondence between coordinates of the touch panel and each moment in the duration of the to-be-edited audio file, a moment corresponding to the touch point; and
adjust the editing duration according to the moment corresponding to the touch point, and the start moment and the end moment of the preset editing duration, wherein
the touch panel of the terminal comprises: a touch screen or a touch control screen of the terminal.

15. The apparatus according to any one of claims 11 to 13, wherein the processing module is specifically configured to:
acquire a touch track of the user on a touch panel of the terminal, and determine coordinates that are of a start point and an end point of the touch track and that are on the touch panel, wherein the start point and the end point of the touch track correspond to an editing start point and end point of the to-be-edited audio file;
determine, according to a preset correspondence between coordinates of the touch panel and each moment in the duration of the to-be-edited audio file, moments corresponding to the start point and the end point of the touch track; and
adjust the editing duration according to the moments corresponding to the start point and the end point of the touch track, and the start moment and the end moment of the preset editing duration, wherein
the touch panel of the terminal comprises: a touch screen or a touch control screen of the terminal.

16. The apparatus according to any one of claims 9 to 15, wherein the apparatus further comprises:
an acquiring module, configured to acquire characteristic information of the to-be-edited audio file, wherein
the characteristic information comprises the duration, the lyrics, and the waveform graph or the spectrum graph.

17. A terminal, comprising: an output device and a processor, wherein the output device is connected to the processor;
the output device is configured to display, on a display interface of the terminal, duration of a to-be-edited audio file, and display, on the display interface of the terminal, lyrics that are of the to-be-edited audio file and that correspond to preset editing duration;
the processor is configured to adjust the editing duration according to a start moment and/or an end moment entered by a user, and display, on the display interface of the terminal by using the output device, lyrics corresponding to the adjusted editing duration, for the user to determine audio file content corresponding to the editing duration; and
the processor is further configured to: when the user determines a start moment and an end moment for final editing, acquire an audio file corresponding to editing duration that is between the start moment and the end moment.

18. The terminal according to claim 17, wherein the output device is specifically configured to:
display, on the display interface of the terminal, the duration of the to-be-edited audio file by using a timeline, and display, on the display interface of the terminal, lyrics that are of the to-be-edited audio file and that correspond to the duration; and
mark the lyrics that are of the to-be-edited audio file and that correspond to the preset editing duration, and display the marked lyrics on the display interface of the terminal, to distinguish display of the lyrics corresponding to the editing duration and lyrics that fall outside the editing duration, wherein
the editing duration is less than or equal to the duration of the to-be-edited audio file.

19. The terminal according to claim 18, wherein the output device is specifically configured to:
perform highlighting processing on the marked lyrics, and display, on a same display window of the display interface of the terminal, the lyrics on which highlighting processing has been performed and the lyrics corresponding to the duration of the to-be-edited audio file; or
perform highlighting processing on the marked lyrics, insert a new display window to a display window of the lyrics corresponding to the duration of the to-be-edited audio file, and display the marked lyrics on the new display window, wherein
the highlighting processing comprises: at least one of using a bold font, coloring, or floating.

20. The terminal according to any one of claims 17 to 19, wherein the output device is further specifically configured to:
correspondingly display, on the display interface of the terminal, a waveform graph or a spectrum graph of the to-be-edited audio file according to the timeline, for the user to perform editing according to the waveform graph or the spectrum graph; and
mark a waveform graph or a spectrum graph corresponding to the preset editing duration, and display, on the display interface of the terminal, the marked waveform graph or spectrum graph and the marked lyrics.

21. The terminal according to claim 20, wherein the output device is specifically configured to:
perform highlighting processing on the marked waveform graph or spectrum graph and the lyrics, and correspondingly display the marked waveform graph or spectrum graph above the timeline; and
display, on a display window of the waveform graph or the spectrum graph, the lyrics corresponding to the duration of the to-be-edited audio file and the lyrics on which highlighting processing has been performed and that are comprised in the to-be-edited audio file, wherein
the highlighting processing comprises: at least one of using a bold font, coloring, or floating.

22. The terminal according to any one of claims 17 to 21, wherein the terminal further comprises an input device, and the input device is connected to the processor;
the input device is configured to acquire a touch point of the user on a touch panel of the terminal, and determine coordinates that are of the touch point and that are on the touch panel, wherein the touch point corresponds to an editing start point or end point of the to-be-edited audio file; and
the processor is specifically configured to:
determine, according to a preset correspondence between coordinates of the touch panel and each moment in the duration of the to-be-edited audio file, a moment corresponding to the touch point acquired by the input device; and
adjust the editing duration according to the moment corresponding to the touch point, and the start moment and the end moment of the preset editing duration, wherein
the touch panel of the terminal comprises: a touch screen or a touch control screen of the terminal.

23. The terminal according to any one of claims 17 to 21, wherein the terminal further comprises an input device, and the input device is connected to the processor;
the input device is configured to acquire a touch track of the user on a touch panel of the terminal, and determine coordinates that are of a start point and an end point of the touch track and that are on the touch panel, wherein the start point and the end point of the touch track correspond to an editing start point and end point of the to-be-edited audio file; and
the processor is specifically configured to:
determine, according to a preset correspondence between coordinates of the touch panel and each moment in the duration of the to-be-edited audio file, moments corresponding to the start point and the end point of the touch track determined by the input device; and
adjust the editing duration according to the moments corresponding to the start point and the end point of the touch track, and the start moment and the end moment of the preset editing duration, wherein
the touch panel of the terminal comprises: a touch screen or a touch control screen of the terminal.

24. The terminal according to any one of claims 17 to 23, wherein the processor is further specifically configured to:
acquire characteristic information of the to-be-edited audio file, wherein
the characteristic information comprises the duration, the lyrics, and the waveform graph or the spectrum graph.
